# EUROPEAN PATENT SPECIFICATION

(11) **EP 4 285 702 B1**
(45) Date of publication and mention of the grant of the patent: **17.06.2026**
(21) Application number: 23175790.7
(22) Date of filing: 26.05.2023
(51) Int. Cl.: A01B 79/00

(54) **WORK MACHINE AND METHOD OF OPERATING SUCH**
ARBEITSMASCHINE UND VERFAHREN ZUM BETRIEB DAVON
MACHINE DE TRAVAIL ET PROCÉDÉ DE FONCTIONNEMENT D'UNE TELLE MACHINE

(30) Priority: 01.06.2022 US 202217830079
(43) Date of publication of application: 06.12.2023
(73) Proprietor: Deere & Company, Moline, IL 61265 (US)
(72) Inventor: Ekhe, Sandeep, Mannheim (DE); Baradakar, Shantanu, Mannheim (DE)
(74) Representative: Reichert, Christian

(56) References cited:
- WO-A1-2020/044802
- CA-A1- 3 098 496
- US-A1- 2019 265 725
- US-A1- 2021 132 573
- US-A1- 2021 243 941

## Description

### FIELD OF THE DISCLOSURE

The present disclosure generally relates to detection systems for work machines, such as agricultural machines, and, more specifically, to detection systems for detecting, mapping, and avoiding objects in or around a field or path of travel of a work machine.

### BACKGROUND

Agricultural machines typically include ground engagement tools or shanks configured to engage or penetrate the ground, and/or to dispense seed or fertilizer onto/into the adjacent ground. During use, the performance of ground engagement tools can be adversely impacted, and associated efficiency reduced, by the presence of objects that are on and/or at least partially beneath the surface of the ground on which engagement tool is being used. Moreover, occasionally during use of such ground engagement tools, the tools may be damaged by inadvertent contact with a relatively large and/or ridged object, such as, for example, a stone or rock, among other objects.

For example, US 2021/132573 A1 discloses work machines, control systems for work machines, and methods of operating work machines, wherein a work machine includes a frame structure, a work implement, and a control system. The work implement is coupled to the frame structure and includes at least one ground engagement tool that is configured for movement in response to interaction with an underlying surface in use of the use work machine. The control system is coupled to the frame structure and includes a sensor mounted to the at least one ground engagement tool and a controller communicatively coupled to the sensor.

Furthermore, in WO 2020/044802 A1 a technique related to an obstacle sensing system mounted on a work vehicle is provided, with which, even when an obstacle in an obstacle sensing region has moved into a blind spot range for a rangefinding part, collision of the work vehicle with the obstacle can be avoided. This obstacle sensing, mounted on a work vehicle, comprises: a rangefinding part for measuring the distance to measurement points in the circumference; and an obstacle sensing part for sensing an obstacle in a prescribed obstacle sensing region on the basis of the measurement results from the rangefinding part. The obstacle sensing part determines whether the obstacle in the obstacle sensing region has moved into a blind spot range, which is the blind spot of the rangefinding part, and if it has been determined that the obstacle has moved into the blind spot range, maintains the obstacle sensing state of sensing the obstacle.

Damage to a ground engagement tool can render the tool unusable at least until the tool is repaired. Yet, parts for such repairs can occasionally be unavailable for prolong or inconvenient periods of time. For example, parts for such repairs may be unavailable until after a time window for an associated farming activity has closed. Further, forgoing such repairs, and opting to continue using a damaged tool can adversely impact the effectiveness of the tool, thereby ultimately leading to relatively large yield loss.

Additionally, even if an object positioned on and/or beneath the surface of the ground will not, damage the engagement tool, the presence of such objects can adversely impact the effectiveness of the agricultural activity. For example, as seed typically does not germinate on stone, placement of seed on a stone by a seeder can result in a waste of both the seed and the associated fertilizer. Further, an undetected presence of an individual or other living creature around an operating agricultural machine can present a potential safety hazard.

Accordingly, devices and/or systems to detect, map, and avoid objects and obstacles remain areas of interest.

### SUMMARY

The present disclosure may comprise one or more of the following features and combinations thereof.

In one embodiment of the present disclosure, a work machine can comprise a control system having an obstacle detection system. A first detection system of the obstacle detection system can be configured to provide a first detection input indicative of a presence of one or more first obstacles on a surface of a particular field. A second detection system of the obstacle detection system can be configured to provide a second detection input indicative of a presence of one or more second obstacles that are at least partially below the surface of the particular field. Additionally, the control system can include a memory having instructions stored therein that are executable by a processor to cause the processor to receive the first detection input and the second detection input, and to selectively map, with the aid of a location system, an obstacle map identifying a location of each of the one or more first and second obstacles. Further, the processor can be configured to assign a first visual indicator to visually indicate on the obstacle map the presence of the one or more first obstacles on the surface of the particular field, and a second visual indicator to visually indicate on the obstacle map that the one or more second obstacles are at least partially below the surface of the particular field, the first visual indicator being different than the second visual indicator.

In another embodiment, a work machine can comprise a control system having an obstacle detection system. A first detection system of the obstacle detection system can be configured to provide a first detection input indicative of a presence of one or more first obstacles on a surface of a particular field, while a second detection system of the obstacle detection system can be configured to provide a second detection input indicative of a presence of one or more second obstacles that are both partially below, and partially above, the surface of the particular field. A third detection system of the obstacle detection system can be configured to provide a third detection input indicative of a presence of one or more third obstacles completely beneath the surface of the particular field. Additionally, the control system can include a memory having instructions stored therein that are executable by a processor to cause the processor to receive the first, second, and third detection inputs, and to selectively map, with the aid of a location system, an obstacle map identifying a location of each of the one or more first, second, and third obstacles. Further, the processor can be configured to assign a first visual indicator to the one or more first obstacles, a second visual indicator to the one or more second obstacles, and a third visual indicator to the one or more third obstacles, the first, second, and third visual indicators providing a different visual indication of a positon relative to the surface of the particular field. The work machine can further include a spotlight system that can be communicatively coupled to the processor. The spotlight system can comprise a light unit and one or more actuators. The light unit can be coupled to the work machine, and the processor can be configured to select a target object from the one or more first, second, and third obstacles. Further, the processor can generate commands to the one or more actuators to adjust a position of the light unit about one or more axes to position the light unit at an orientation that directs a light emitted from the light unit toward the target object.

In a further embodiment of the present disclosure, a method is provided for operating a work machine that can include a frame structure coupled to a work implement that has a plurality of ground engagement tools that are configured for interaction with an underlying surface in use of the work machine. The method can comprise receiving, by a controller of the work machine, a first detection input provided by a first obstacle detection system that is indicative of a presence of a first obstacle positioned on a surface of a particular field, and receiving, by the controller, a second detection input provided by a second obstacle detection system that is indicative of a presence of a second obstacle that is partially positioned beneath, and partially positioned above, the surface of the particular field. Additionally, the controller can receive a third detection input provided by a third obstacle detection system that is indicative of a presence of a third obstacle that is positioned entirely beneath the surface of the particular field. Additionally, the controller can identify the presence of the first obstacle in the particular field based on the first detection input, the presence of the second obstacle in the particular field based on the second detection input, and the presence of the third obstacle in the particular field based on the third detection input. The controller can also selectively map, with the aid of a location system, a location of: the first obstacle based on the first detection input, the second obstacle based on the second detection input, and, the third obstacle based on the third detection input. Further, the controller can also assign a first visual indicator to the first obstacle, a second visual indicator to the second obstacle, and a third visual indicator to the third obstacle, the first, second, and third visual indicators providing a different visual indication of a positon relative to the surface of the particular field.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a perspective view of a work implement of a work machine with a ground engagement tool thereof depicted in a normal operating position;
FIG. 2 is a perspective view of the work implement of FIG. 1 with the ground engagement tool thereof depicted in a tripped position;
FIG. 3 is a side elevation view of a ground engagement tool of the work implement of FIG. 1 with one or more movement sensors and/or at least one obstacle detection system coupled thereto;
FIG. 4 is a perspective view of the work machine as an agricultural vehicle coupled to the agricultural implement of FIG. 1 that has one or more load sensors;
FIG. 5 is a perspective view of the agricultural vehicle shown in FIG. 4 having one or more obstacle detection systems coupled thereto;
FIG. 6 is a diagrammatic view of a control system for the work machine that includes the work implement shown in FIG. 1;
FIG. 7 is a diagrammatic view of a number of modules that may be included in a controller of the control system shown in FIG. 6;
FIG. 8 is a simplified flowchart of a method that may be performed by a tool performance module of the controller diagrammatically depicted in FIG. 7;
FIG. 9 is a simplified flowchart of a method that may be performed by a tool ground engagement detection module of the controller diagrammatically depicted in FIG. 7;
FIG. 10 is a simplified flowchart of a method that may be performed by a tool soil compaction detection module of the controller diagrammatically depicted in FIG. 7;
FIG. 11 is a simplified flowchart of a method that may be performed by a tool movement profile detection module of the controller diagrammatically depicted in FIG. 7;
FIG. 12 is a simplified flowchart of a method that may be performed by one obstacle detection and mapping module of the controller diagrammatically depicted in FIG. 7;
FIG. 13 is a simplified flowchart of a method that may be performed by another obstacle detection and mapping module of the controller diagrammatically depicted in FIG. 7;
FIG. 14A is a diagrammatic view of a modified portion of the control system shown in FIG. 6 for the work machine that includes the work implement shown in FIG. 1;
FIG. 14B is a diagrammatic view of an exemplary central system that can be communicatively coupled to the control systems of work machines;
Fig. 14C is a diagrammatic view of a control system for the work machine that includes the work implement shown in FIG. 1;
FIG. 15 is a simplified flowchart of a method for generating an obstacle map that can be performed by an obstacle detection and mapping module of the controller that is diagrammatically depicted in FIG. 7;
FIG. 16 is an overhead view of the work machine coupled to the agricultural implement and equipped to detect objects in a path of travel that are positioned on and/or at least partially, if not entirely, beneath the surface of the ground;
FIG. 17 is an exemplary obstacle map generated using the obstacle detection system being displayed on a display;
FIG. 18 is a simplified flowchart of a method for updating the obstacle map that can be performed by the obstacle detection and mapping module of the controller that is diagrammatically depicted in FIG. 7;
FIG. 19 is a simplified flowchart of a method for using information from the obstacle map to adjust operations of the work machine and/or to provide operator alerts that can be performed by using the obstacle detection and mapping module of the controller that is diagrammatically depicted in FIG. 7;
FIG. 20 is a simplified flowchart of a method for the work vehicle and/or the agricultural implement to avoid a detected object; and
FIG. 21 is a simplified flowchart of a method for alerting an operator of the work vehicle of a detected object that may be performed using the spotlight indicator module of the controller that is diagrammatically depicted in FIG. 7.

Corresponding reference numerals are used to indicate corresponding parts throughout the several views.

### DETAILED DESCRIPTION

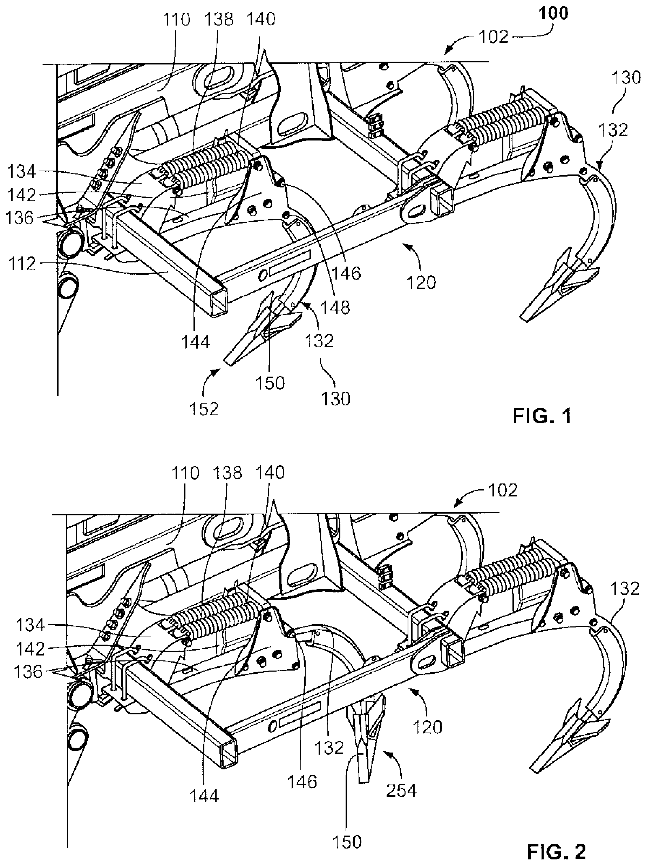

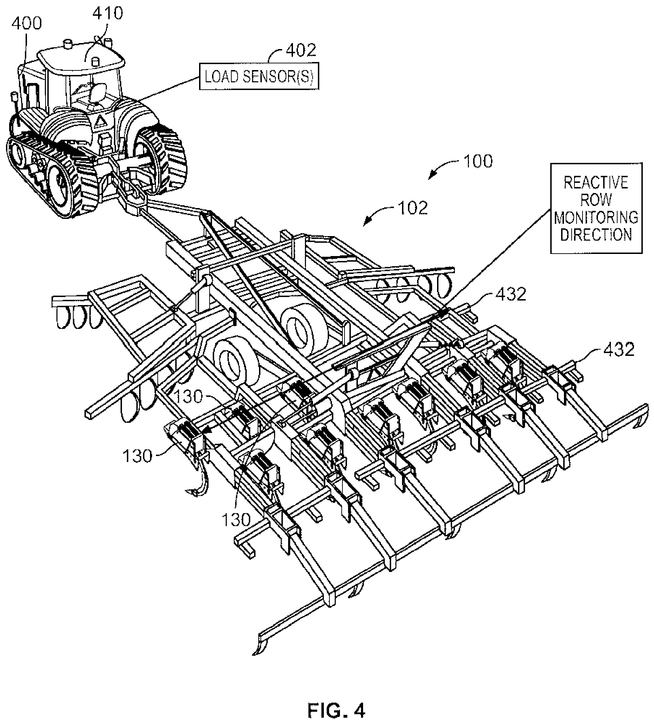

Referring now to FIG. 1, an illustrative work machine 100 is embodied as, or otherwise includes, an agricultural implement 102 that is configured for interaction with an underlying surface (i.e., the ground) in use thereof. It should be appreciated that the implement 102 is configured for attachment to a hitch, drawbar, or other suitable implement attachment interface of an agricultural vehicle such as a tractor 400 (see FIG. 4), for example. The tractor 400 is therefore configured to tow, pull, or otherwise drive movement of the implement 102 in use of the implement 102.

In the illustrative embodiment, the agricultural implement 102 is embodied as, or otherwise includes, tillage equipment. In some embodiments, the illustrative implement 102 may be embodied as, or otherwise include, any one of a number of tillage devices manufactured by John Deere. For example, the implement 102 may be embodied as, or otherwise include, any one of the following: a series 22B Ripper, a series 2720 Disk Ripper, a series 2730 Combination Ripper, a series 2100 Minimum-Till, a series 913 V-Ripper, a series 915 V-Ripper, a SR1201 Frontier^{™} Shank Ripper, a SR1202 Frontier^{™} Shank Ripper, and a SR1203 Frontier^{™} Shank Ripper. Of course, in other embodiments, it should be appreciated that the agricultural implement 102 may be embodied as, or otherwise include, any other suitable tillage device.

The illustrative agricultural implement 102 is adapted for use in one or more tillage applications. However, in some embodiments, the implement 102 may be adapted for use in other applications. For example, in some embodiments, the implement 102 can be a ground contact implement that is embodied as a seeder or planter device. Additionally, the implement 102 can be embodied as, included in, or otherwise adapted for use with, equipment used in lawn and garden, construction, landscaping and ground care, golf and sports turf, forestry, engine and drivetrain, or government and military applications. In such embodiments, the implement 102 of the present disclosure may be included in, or otherwise adapted for use with, tractors, front end loaders, scraper systems, cutters and shredders, hay and forage equipment, planting equipment, seeding equipment, sprayers and applicators, utility vehicles, mowers, dump trucks, backhoes, track loaders, crawler loaders, dozers, excavators, motor graders, skid steers, tractor loaders, wheel loaders, rakes, aerators, skidders, bunchers, forwarders, harvesters, swing machines, knuckleboom loaders, diesel engines, axles, planetary gear drives, pump drives, transmissions, generators, or marine engines, among other suitable equipment.

The illustrative agricultural implement 102 includes a frame structure 110 and a work implement 120 coupled to the frame structure 110. The frame structure 110 may include, or otherwise be embodied as, a main frame or main chassis of the implement 102. The work implement 120 is embodied as, or otherwise includes, a collection of structures that are configured for interaction with the ground to till or cultivate an agricultural field.

In the illustrative embodiment, the work implement 120 includes ground engagement tools 130, each of which is configured for movement in response to interaction with an underlying surface (i.e., the ground) in use of the work machine 100 as further discussed below. Each of the illustrative ground engagement tools 130 is embodied as, or otherwise includes, a shank assembly 132. However, in other embodiments, it should be appreciated that each of the ground engagement tools 130 may be embodied as, or otherwise include, another suitable ground engagement device, such as a blade, a disk, a roller, a sweep, a tine, a chisel, or a plow, for example.

As best seen in FIGS. 1-3, each shank assembly 132 illustratively includes a retention assembly 134, a base bar 136, biasing elements 138, 140, plates 142, 144, a pivot pin 146, a shear pin 148, and a shank member 150. The retention assembly 134 is embodied as, or otherwise includes, a number of components cooperatively configured to receive a mounting bar 112 included in, or otherwise coupled to, the frame structure 110 to retain the shank assembly 132 during operation. The base bar 136 is pivotally coupled to the retention assembly 134 (i.e., to at least one component thereof) and positioned between, and in contact with, the plates 142, 144. The biasing elements 138, 140 extend between, and are coupled to, the retention assembly 134 and the plates 142, 144 such that the biasing elements 138, 140 are vertically spaced from the base bar 136. The shank member 150 is pivotally coupled to the plates 142, 144 by the pivot pin 146. Pivotal movement of the shank member 150 relative to the plates 142, 144 is substantially limited by the shear pin 148, which at least partially secures the shank member 150 to the plates 142, 144.

When the shank member 150 of each shank assembly 132 contacts and/or penetrates the ground in use of the work machine 100, the shank member 150 may be exposed to underground obstacles, such as rocks, washouts, impediments, obstructions, etc. Contact with an obstacle of considerable size may cause the shear pin 148 to shear or fracture, thereby allowing the shank member 150 to pivot relative to the plates 142, 144 about the pivot pin 146 upwardly and away from the obstacle to minimize damage to the shank assembly 132. Thus, shearing or fracturing of the shear pin 148 provides a protective measure that results in, or is otherwise associated with, movement of the shank assembly 132 away from its normal ground-engaging position.

Referring now to FIGS. 1 and 2, one shank assembly 132 (i.e., the leftmost shank assembly 132) is illustratively depicted in a ripping position 152 (see FIG. 1) and a tripped position 254 (see FIG. 2). The ripping position 152 of the shank assembly 132 corresponds to, or is otherwise associated with, a normal operating position of the shank assembly 132 in which the shank member 150 penetrates the ground. In the ripping position 152 of the shank assembly 132, the shank member 150 is configured for some degree of movement (e.g., movement with the plates 142, 144 relative to the retention assembly 134 that is facilitated by the biasing elements 138, 140) when the shank member 150 penetrates the ground. However, as indicated above, such movement is limited by the intact shear pin 148. In response to shearing or fracturing of the shear pin 148, the shank member 150 pivots relative to the plates 142, 144 away from the ground to the tripped position 254.

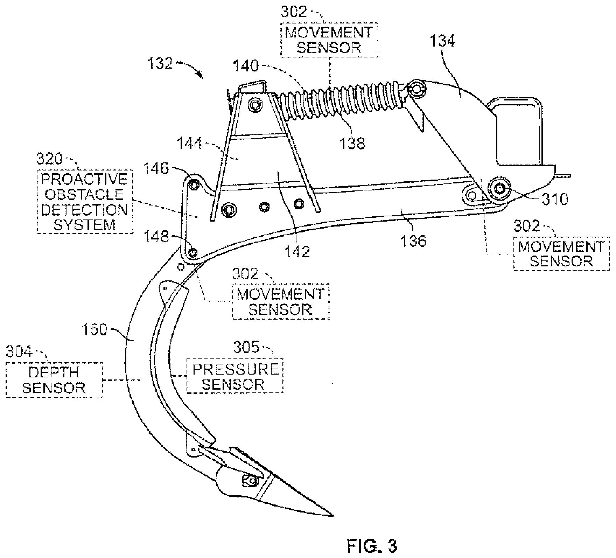

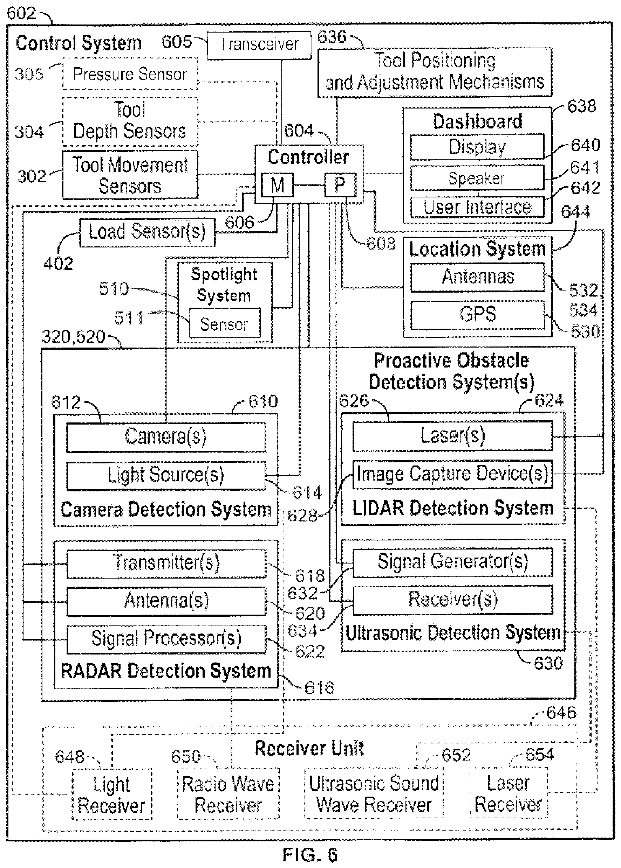

To control operation of the agricultural implement 102, the work machine 100 illustratively includes a control system 602 (see FIG. 6). The control system 602 may be coupled to and mounted on the frame structure 110 of the agricultural implement 102 or on the tractor 400, among other work machines. As described in greater detail below, the control system 602 includes a movement sensor 302 (see FIG. 3) mounted to each shank assembly 132 that is configured to provide sensor input and a controller 604 communicatively coupled to the movement sensor 302. The controller 604 includes memory 606 having instructions stored therein that are executable by a processor 608 to cause the processor 608 to receive the sensor input from the movement sensor 302 and to determine that the corresponding shank assembly 132 is in contact with the ground in response to receipt of sensor input from the sensor 302 that is indicative of a characteristic of movement of the shank assembly 132 in use of the work machine 100.

Such control by the controller 604 facilitates monitoring and/or evaluation of the performance of each shank assembly 132 in use of the work machine 100, among other things. In the illustrative embodiment, when each shank assembly 132 is in the ripping position 152, the sensor input provided by each movement sensor 302 is indicative of a characteristic of movement of the corresponding shank assembly 132 that occurs during, corresponds to, or is otherwise associated with, normal operation of the work machine 100. It should be appreciated that the sensor input provided by each movement sensor 302 that occurs during normal operation of the work machine 100 may be characterized by, or otherwise associated with, sensor input below a reference threshold and/or within a reference tolerance. It should also be appreciated that a lack of sensor input from each movement sensor 302, sensor input from each movement sensor 302 that exceeds the reference threshold, and/or sensor output from each movement sensor 302 that lies outside of the reference tolerance may be indicative of a fault condition of the work machine 100, such as movement of one or more shank assemblies 132 to the tripped position(s) 254 in response to encountering one or more obstacles, for example.

Referring now to FIG. 3, in some embodiments, one movement sensor 302 included in the control system 602 may be mounted to each shank assembly 132 in close proximity to the shear pin 148. In such embodiments, sensor input provided by the sensor 302 may be used to detect movement of the shank member 150 and/or the presence of the shear pin 148 in use of the work machine 100. In other embodiments (i.e., as indicated by the depiction of those features in phantom), one movement sensor 302 may be mounted to each shank assembly 132 in another suitable location. In one example, the movement sensor 302 may be mounted in close proximity to the biasing elements 138, 140 to detect deflection of the elements 138, 140 in use of the work machine 100. In another example, the movement sensor 302 may be mounted in close proximity to a pivotal coupling 310 between the retention assembly 134 and the base bar 136 to detect movement of various components (e.g., the base bar 136 and/or the plates 142, 144 relative to the retention assembly 134) in use of the work machine 100. Of course, it should be appreciated that in other embodiments still, the movement sensor 302 may be mounted to each shank assembly 132 in another suitable location.

In the illustrative embodiment, each movement sensor 302 is embodied as, or otherwise includes, any device or collection of devices capable of sensing movement of the shank assembly 132 to which the movement sensor 302 is mounted. In some embodiments, each movement sensor 302 may be embodied as, or otherwise include, a linear potentiometer, a rotary potentiometer, an accelerometer, an inertial sensor or inertial measurement device, a Hall effect sensor, a proximity sensor, a capacitive transducer, or the like. Of course, in other embodiments, it should be appreciated that each movement sensor 302 may be embodied as, or otherwise include, another suitable device.

In some embodiments, a depth sensor 304 included in the control system 602 may be mounted to the shank member 150 of each shank assembly 132. Each depth sensor 304 may be illustratively embodied as, or otherwise include, any device or collection of devices capable of providing sensor input indicative of a characteristic of position of the shank assembly 132 to which the depth sensor 304 is mounted relative to the ground. In some embodiments, the sensor input provided by each depth sensor 304 may be indicative of a distance that the corresponding shank member 150 extends into the ground (i.e., a penetration depth of the shank member 150 into the ground). In some embodiments, each depth sensor 304 may be embodied as, or otherwise include, a linear potentiometer, a rotary potentiometer, an accelerometer, an inertial sensor or inertial measurement device, a Hall effect sensor, a proximity sensor, a capacitive transducer, or the like. Of course, in other embodiments, it should be appreciated that each depth sensor 304 may be embodied as, or otherwise include, another suitable device.

It should be appreciated that in some embodiments, the depth sensors 304 may be omitted from the control system 602 entirely. In such embodiments, a characteristic of position of the shank assembly 132 (e.g., a penetration depth or distance that the shank member 150 extends into the ground) may be determined based on sensor input provided by other sensor(s) included in the control system 602, such as the movement sensors 302, for example.

In some embodiments, a pressure sensor 305 can be included in, or communicatively coupled to, the control system 602. The pressure sensor 305 can be mounted to the implement 102, such as, for example, to a shank member 150 of one or more, if not all, of the shank assemblies 132. Alternatively, or additionally, a pressure sensor 305 can be mounted to an additional component of the implement 102 that is generally dedicated to the operation and/or use of the pressure sensor 305. Each pressure sensor 305 can be embodied as, or otherwise include, any device or collection of devices capable of providing sensor input indicative of a characteristic of pressure experienced or detected by, including provided against, the shank assembly 132 or other portions of the implement 102 to which the pressure sensor 305 is mounted. In some embodiments, sensor input provided by each pressure sensor 305 can be indicative of the shank assembly 132, or other associated implement 102 component, contacting or hitting an object that may be positioned on, or at least partially, if not completely, beneath, a surface of the adjacent ground, including, for example, buried beneath the surface of the soil of a field in which the implement 102 is being utilized. In some embodiments, each pressure sensor 305 can be embodied as, or otherwise include, a strain gauge or solid-state pressure sensor, as well as combinations thereof. Of course, in other embodiments, it should be appreciated that each pressure sensor 305 can be embodied as, or otherwise include, another suitable device.

The control system 602, including, for example, the controller 604, can be adapted to detect if a sensor input from the pressure sensor 305 exceeds a threshold level. The threshold level can, for example, be at least partially based on the sensor input level or amount anticipated to be received when an associated shank member 150, or other associated component of the implement 102 to which the pressure sensor 305 is mounted, contacts or hits an object having a particular rigidity and/or size. For example, the threshold level can be associated with an anticipated pressure level detected when contacting or hitting a stone or rock, and/or a stone or rock have a particular size, depth within the ground, and/or level of adherence to the adjacent soil.

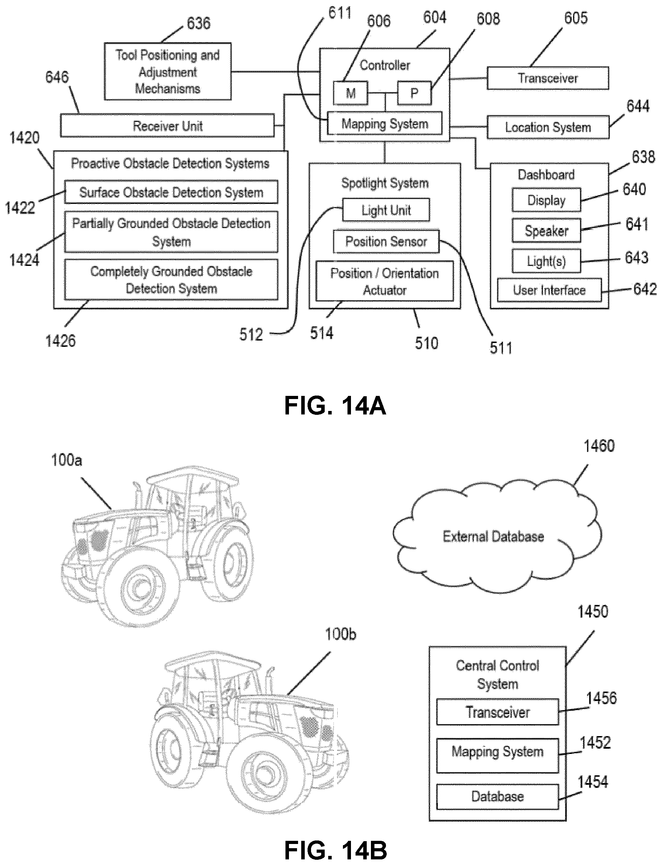

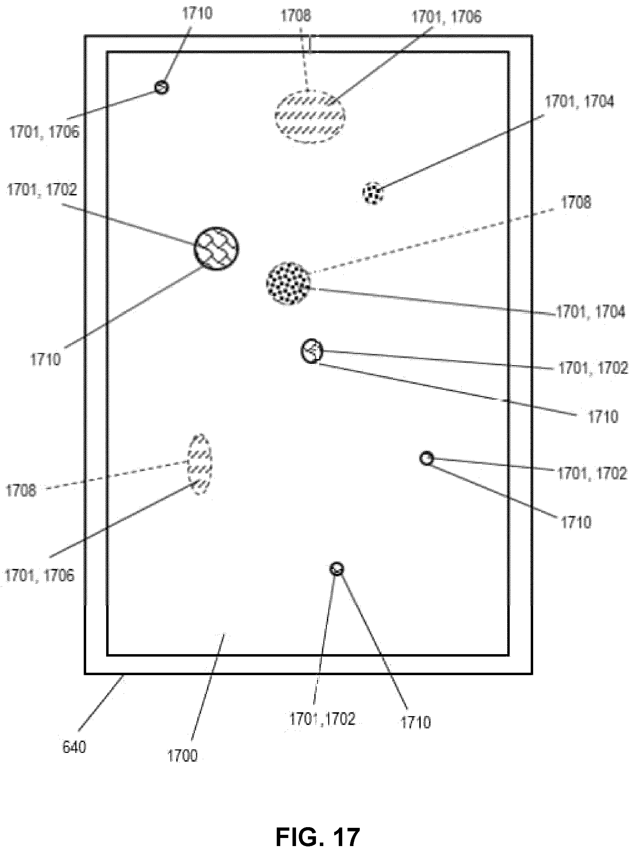

In instances in which the sensor input from the pressure sensor 305 exceeds such a threshold level, the controller 604 can determine, or identify, the particular shank(s) 150 or other component of the implement 102 that is associated with the sensor input. The controller 604 can also utilize information from the depth sensor 304 to at least estimate, if not determine, the depth at which the contacted object was is located in, or beneath, the ground. The controller 604 can further utilize information from the location system 644, including the GPS 530, as well as a relative position of the shank 150 or other component that contacted the object, in connection with determining a location of the detected object in the field. Information regarding the location and/or depth of the detected object in the field can be used by the controller 604, and/or a mapping system 611 (FIG. 14A) to map a location of the detected object on an obstacle map 1700 (FIG. 17), and/or to generate event data for the field.

It should be appreciated that in some embodiments, the pressure sensors 305 can be omitted from the control system 602 entirely. In such embodiments, detection of an obstacle positioned least partially, if not completely, beneath the surface of the ground can be determined based on, for example, information provided by one or more of the obstacle detection systems 320, 520, 1420 (FIG. 14A).

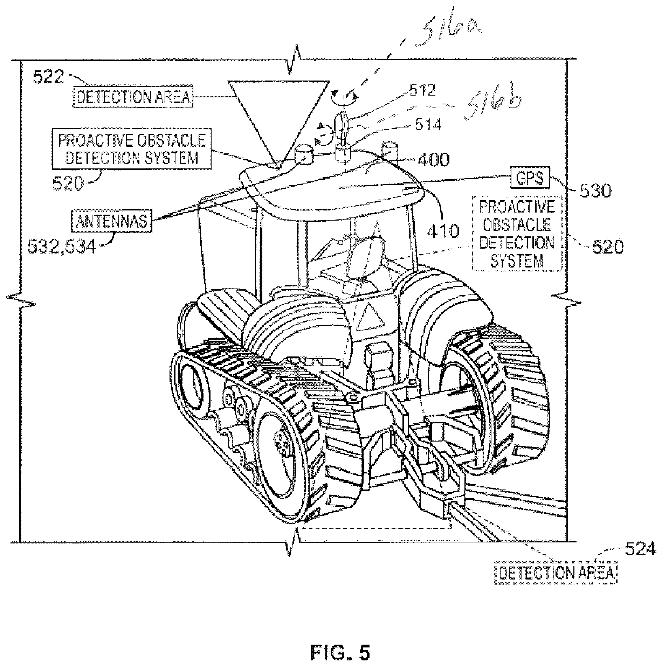

In some embodiments, an obstacle detection system 320 included in the control system 602 may be coupled to the work machine 100 (i.e., as indicated by the depiction of that feature in phantom). The obstacle detection system 320, and similar systems described below with reference to FIGS. 5 and 6, is embodied as, or otherwise includes, any collection of devices capable of cooperatively providing detection input indicative of a presence or absence of one more obstacles in an agricultural field. The obstacle detection system 320 proactively detects the presence or absence of obstacles in a predetermined or reference detection area, which may be established based on the coupling location of the obstacle detection system 320 to the work machine 100. In embodiments in which one or more obstacle detection systems 320 are coupled to the work machine 100 and one movement sensor 302 is mounted to each shank assembly 132, the one or more detection systems 320 and the movement sensors 302 may provide, respectively, proactive and reactive devices for monitoring the performance of the shank assemblies 132 and identifying underground obstacles that may be encountered by the work machine 100 in use thereof.

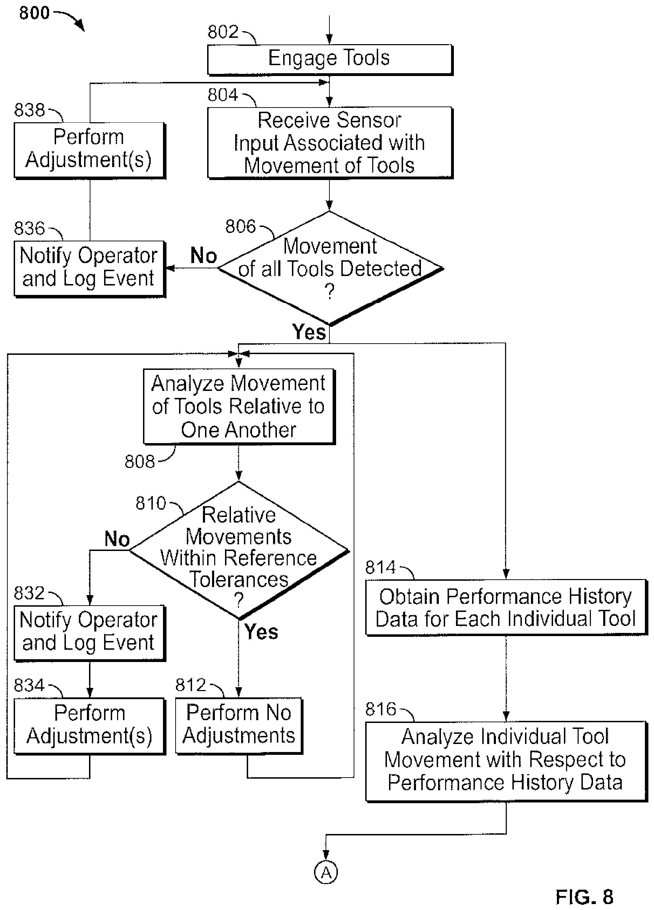

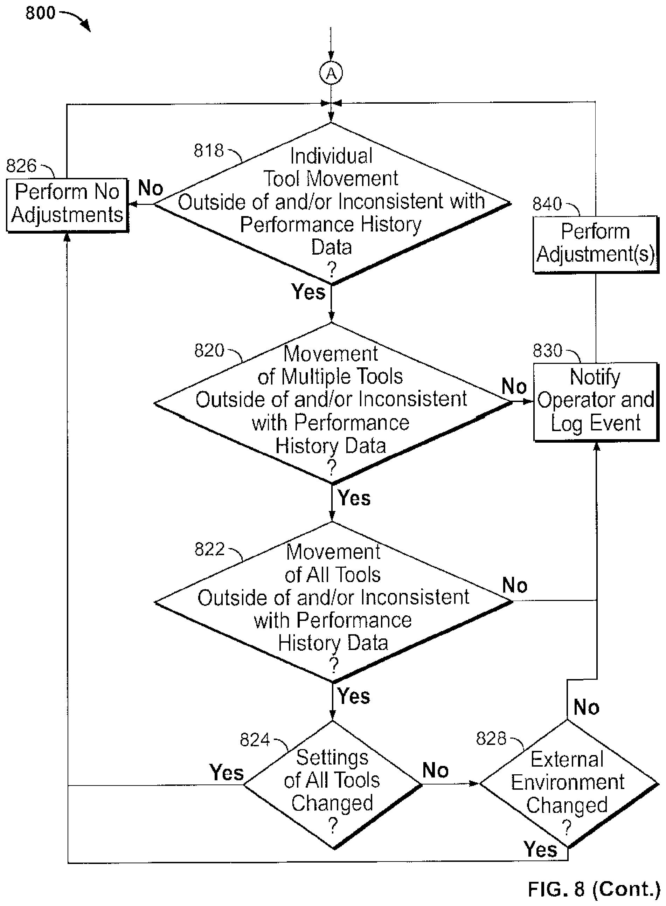

Referring now to FIG. 4, the work machine 100 is coupled to and towed by the tractor 400 in use thereof. The ground engagement tools 130 of the illustrative work machine 100 are arranged adjacent to one another in rows 432. To evaluate performance uniformity of the agricultural implement 102 across each of the rows 432, as described in greater detail below with reference to FIG. 8, the instructions stored in the memory 606 are executable by the processor 608 to cause the processor 608 to receive the sensor input provided by the movement sensors 302 coupled to the shank assemblies 132, to detect movement of each of the shank assemblies 132 based on the sensor input, and to analyze movements of the shank assemblies 132 relative to one another in response to detection of movement of each of the shank assemblies 132.

In some embodiments, one or more load sensors 402, which may be included in the control system 602 or provided externally from the control system 602, may be mounted to the tractor 400. Each load sensor 402 may be embodied as, or otherwise include, any device or collection of devices capable of providing tow load sensor input indicative of a tow load associated with the implement 102 when the vehicle 400 is used to tow the implement 102. In some embodiments, each load sensor 402 may be embodied as, or otherwise include, a load cell such as a strain gage load cell, a piezoelectric load cell, a hydraulic load cell, or a pneumatic load cell, for example. Of course, in other embodiments, it should be appreciated that each load sensor 402 may be embodied as, or otherwise include, another suitable load sensor. It should be appreciated that in some embodiments, the tow load sensor input provided by each of the sensor(s) 402 may be indicative of an actual load applied to a hitch of the tractor 400 by the implement 102. Additionally, it should be appreciated that in other embodiments, the tow load sensor input provided by each of the sensor(s) 402 may be indicative of a load applied to an engine of the tractor 400 by the implement 102, or of fuel consumed by the engine of the tractor 400 while towing the implement 102.

Referring now to FIG. 5, in some embodiments, rather than being mounted on or coupled to the work machine 100 (e.g., like the obstacle detection system 320), an obstacle detection system 520 may be mounted in one or more locations (i.e., as indicated by the depiction of one or more features in phantom) on the tractor 400. The obstacle detection system 520 may be substantially identical to the obstacle detection system 320. In one example, the obstacle detection system 520 may be mounted on an operator cab 410 of the vehicle 400 to facilitate proactive detection of the presence or absence of obstacles in a predetermined or reference detection area 522 that is located in front of the vehicle 400. In another example, the obstacle detection system 520 may be mounted on the operator cab 410 to facilitate proactive detection of the presence or absence of obstacles in a predetermined or reference detection area 524 that is located behind the vehicle 400. Of course, it should be appreciated that in other embodiments, the obstacle detection system 520 may be mounted on the vehicle 400 in another suitable location.

In the illustrative embodiment, the agricultural vehicle 400 has a Global Positioning System (GPS) 530 coupled thereto. It should be appreciated that the GPS 530 may be integrated with the electrical components of the control system 602 (e.g., as depicted in FIG. 6) or included as an accessory that may be added on to the vehicle 400. The GPS 530 is illustratively mounted on the operator cab 410. However, in other embodiments, it should be appreciated that the GPS 530 may be mounted in another suitable location, such as on another portion of the vehicle 400 or on the agricultural implement 102, for example.

The illustrative vehicle 400 has antennas 532, 534 coupled thereto and mounted on the operator cab 410. Of course, it should be appreciated that, in other embodiments, the antennas 532, 534 may be coupled to and mounted on another suitable portion of the vehicle 400. The antennas 532, 534 are communicatively coupled to the GPS 530 and adapted for use therewith. In some embodiments, rather than being externally coupled to the GPS 530, the antennas 532, 534 may be integrated with and/or included in the GPS 530. In any case, the antennas 532, 534 are configured to receive signals from satellites or the like so that the location of the antennas 532, 534 may be determined by the GPS 530. Put another way, the physical location of the antennas 532, 534 may be the basis for establishing the location identified by the GPS 530.

The illustrative vehicle 400 can include one or more light units 512, such as, for example, spotlights. The light units 512 can be mounted at, or coupled to, various locations about the vehicle 400 and/or work implement 102, including, for example, mounted on the operator cab 410, as seen in FIG. 5. According to certain embodiments, spotlight system 510 and/or the light unit 512 can be a modular unit, including, for example, a plug and play device, that can be selectively utilized with, or selectively be coupled and decoupled from, work a machine 100. Such a construction can accommodate the spotlight system 510 and/or light unit 512 to be transferrable to, or among, different work machines 100. The light unit 512, as well as one or more associated actuators 514 and sensors 511, can be part of a spotlight system 510 (FIGS. 6 and 14A) that is communicatively coupled to the controller 604. As discussed below, the spotlight system 510 is configured to utilize the light unit 512 to selectively illuminate a particular object(s) and/or area that is currently, and/or has previously been, detected by one or more of the obstacle detection systems 320, 520, 1420. As discussed below, the selection of objects for illumination via operation of the light unit 512 can be based on a variety of criteria, including, for example, the positon, size, and/or rigidity of the object. Additionally, the spotlight system 510 is configured to continue to illuminate the selected object for a predetermined time period and/or until a threshold condition is satisfied, including continuing to focus light emitted onto the object and/or are while the relative position of the vehicle 400 and/or work implement 102 changes, such as, for example, as the vehicle 400 and/or work implement 102 travels or otherwise moves along in a field.

According to certain embodiments, the spotlight system 510 can be communicatively coupled to the location system 644, including the GPS 530, and adapted for use therewith. Alternatively, the spotlight system 510 can include a dedicated GPS or other location system. Information provided by the location system 644, or a dedicated system, can be used by, or provide to, the spotlight system 510 information regarding the location of the vehicle 400, the work implement 102, the light unit 512, and/or the detected object that is to be illuminated. Such information can also be used in connection with determining changes in the position(s) of the work vehicle 400, implement 102, and/or light unit 512 relative to an object that is, or as been, detected by one or more of the at least one proactive obstacle detection systems 320, 520, 1420.

Additionally, according to certain embodiments, the spotlight system 510 can include one or more sensors 511, such as, for example, a rotation angle or rotational position sensor(s). The sensor(s) 511 can provide information regarding at least the current position and/or orientation of the light unit 512, which can indicate the direction at which light is being emitted, transmitted, or projected (collectively "emitted") from the light unit 512. Further, information from the sensor(s) 511 can be used to determine the extent the position and/or orientation of the light unit 512 is to be changed, or adjusted, so that the light emitted from the light unit 512 is directed toward, and, during movement of the at least the work vehicle 100, continues to be directed toward, the selected object or area.

The light unit 512 can have a variety of configurations, as well as positioned at a variety of different locations along the work machine 100 and/or implement 102. For example, according to certain embodiments, the light unit 512 can be an auxiliary light unit that can be mounted to the roof, hood, grill, and/or bumper of the cab 410, as shown in FIG. 5, among other mounting locations along the work machine 100 and/or implement 102. Additionally, according to other embodiments, the light unit 512 can be at least a portion of a headlight of the work machine 100 that can be displaceable relative to, and/or independent of, other portions of an associated headlight assembly so as to be able, if needed, to focus light, and continue to focus light during movement of the work vehicle 100, at a selected location and/or emit light in a direction different than a direction light is emitted from other portions of the headlight assembly. According to other embodiments, the light unit 512 can comprise a rack of lights or spotlights that can be mounted to the work machine 100 and/or implement 102, and which are also either individually or collectively selectively displaceable along one or more axes 516a, 516b, as discussed below.

A variety of different types of illumination devices or structures can be used for the light unit 512. For example, according to various embodiments, the light unit 512 can be a Plano convex, ellipsoidal, Fresnel, parabolic aluminized reflector (PAR), PAR pin, beam projector, or followspot type of spotlight. Additionally, a variety of different types of illumination sources can be used with the spotlight(s) 512, including, for example, one or more incandescent lights, light-emitting diode (LED) lights, and lasers, among others, as well as any combination thereof.

The actuator 514 can be configured to alter or change the orientation of the light unit 512 by facilitating displacement of the light unit 512 about one or more axes 516a, 516b. For example, FIG. 5 provides an illustrated embodiment in which one or more actuators 514 can displace the light unit 512 about a first axis 516a that is generally perpendicular to the ground and/or a roof of the operator cab 410, and a second axis 516b that is generally perpendicular to the first axis 516a. According to such an embodiment, displacement of the light unit 512 about the first axis 516a can facilitate side-to-side rotational movement of the light unit 512, thereby adjusting the lateral position of the light unit 512 and the lateral direction at which light is emitted from the light unit 512. Displacement of the light unit 512 about the second axis 516b can facilitate the vertical orientation, or tilt, of the light unit 512. A variety of different types of actuators 514 can be utilized, including, for example, mechanical actuators, electro/mechanical actuators, electric actuators, hydraulic actuators, and pneumatic actuators, among other actuators and motors, as well as a combination thereof.

Referring now to FIG. 6, in the illustrative embodiment, the control system 602 includes the movement sensors 302, the one or more load sensor(s) 402, at least one proactive obstacle detection system 320, 520, 1420, tool positioning and adjustment mechanisms 636, a dashboard 638, and a location system 644. Each of the devices and/or systems 302, 304, 402, 320, 510, 520, 636, 638, 644 is communicatively coupled to the controller 604. In some embodiments, the control system 602 may include a receiver unit 646 communicatively coupled to the controller 604. Additionally, in some embodiments as indicated above, the control system 602 may include the depth sensors 304.

The processor 608 of the illustrative controller 604 may be embodied as, or otherwise include, any type of processor, controller, or other compute circuit capable of performing various tasks such as compute functions and/or controlling the functions of the agricultural implement 102. For example, the processor 608 may be embodied as a single or multi-core processor(s), a microcontroller, or other processor or processing/controlling circuit. In some embodiments, the processor 608 may be embodied as, include, or otherwise be coupled to an FPGA, an application specific integrated circuit (ASIC), reconfigurable hardware or hardware circuitry, or other specialized hardware to facilitate performance of the functions described herein. Additionally, in some embodiments, the processor 608 may be embodied as, or otherwise include, a high-power processor, an accelerator co-processor, or a storage controller. In some embodiments still, the processor 608 may include more than one processor, controller, or compute circuit.

The memory device 606 of the illustrative controller 604 may be embodied as any type of volatile (e.g., dynamic random access memory (DRAM), etc.) or non-volatile memory capable of storing data therein. Volatile memory may be embodied as a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

In some embodiments, the memory device 606 may be embodied as a block addressable memory, such as those based on NAND or NOR technologies. The memory device 606 may also include future generation nonvolatile devices, such as a three dimensional crosspoint memory device (e.g., Intel 3D XPoint^{™} memory), or other byte addressable write-in-place nonvolatile memory devices. In some embodiments, the memory device 606 may be embodied as, or may otherwise include, chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In some embodiments, 3D crosspoint memory (e.g., Intel 3D XPoint^{™} memory) may comprise a transistor-less stackable cross point architecture in which memory cells sit at the intersection of word lines and bit lines and are individually addressable and in which bit storage is based on a change in bulk resistance.

In the illustrative embodiment, the control system 602 includes the obstacle detection system 320 and/or the obstacle detection system 520. Each of the illustrative systems 320, 520 may be embodied as, or otherwise include, any one of the following: a camera detection system 610, a radar detection system 616, a lidar detection system 624, and an ultrasonic detection system 630. Of course, it should be appreciated that in other embodiments, each of the illustrative systems 320, 520 may include one or more of the systems 610, 616, 624, 630. Additionally, according to certain embodiments, the obstacle detection system 520 can include at least one detection system, such as, for example, the ultrasonic detection system 630 and/or a pressure detection system, that is/are utilized to detect the presence of an object(s) beneath the ground, including objects that are at least partially or completely beneath ground, and at least one other detection system, such as, for example, one or more of the camera, radar, and/or lidar detection systems 610, 616, 624, to detect the presence of an object above, on, or protruding from the surface of the ground. Furthermore, at least in some embodiments, it should be appreciated that the control system 602 may include either the movement sensors 302 or one of the obstacle detection systems 320, 520.

The illustrative camera detection system 610 is embodied as, or otherwise includes, any device or collection of devices capable of detecting and/or imaging obstacles in an agricultural field that may be encountered by the agricultural implement 102 in use thereof. The illustrative system 610 includes one or more camera(s) 612 and one or more light source(s) 614 communicatively coupled to the controller 604. Each camera 612 is configured to capture and/or store images of an agricultural field to locate and identify underground obstacles. In some embodiments, each camera 612 may be embodied as, or otherwise include, a digital camera, a panoramic camera, or the like, for example. Additionally, in some embodiments, each camera 612 may be included in, coupled to, or otherwise adapted for use with, a vision system. It should also be appreciated that each camera 612 has a viewable area associated therewith that may be illuminated with the aid of the one or more light source(s) 614. Each light source 614 may be embodied as, or otherwise include, any device capable of producing light to facilitate capture and/or identification of obstacles present in an agricultural field. It should be appreciated in some embodiments, the detection system 610 may include other suitable components in addition to, or as an alternative to, the aforementioned devices.

The illustrative radar detection system 616 is embodied as, or otherwise includes, any device or collection of devices capable of detecting and/or imaging, based on radio waves, obstacles in an agricultural field that may be encountered by the agricultural implement 102 in use thereof. The illustrative system 616 includes one or more transmitter(s) 618, one or more antenna(s) 620, and one or more signal processor(s) 622 communicatively coupled to the controller 604. Each transmitter 618 is embodied as, or otherwise includes, any device or collection of devices capable of emitting radio waves or radar signals in predetermined directions toward obstacles located in an agricultural field. Each antenna or receiver 620 is embodied as, or otherwise includes, any device or collection of devices capable of receiving radar signals emitted by the transmitter(s) 618 that are reflected and/or scattered by the obstacles. Each signal processor 622 is embodied as, or otherwise includes, any device or collection of devices (e.g., one or more processor(s)) capable of amplifying, processing, and/or conditioning radar signals received by the antenna(s) 620 to recover useful radar signals. It should be appreciated in some embodiments, the detection system 616 may include other suitable components in addition to, or as an alternative to, the aforementioned devices.

The illustrative lidar detection system 624 is embodied as, or otherwise includes, any device or collection of devices capable of detecting and/or imaging, using ultraviolet, visible, or near infrared light, obstacles in an agricultural field that may be encountered by the agricultural implement 102 in use thereof. The illustrative detection system 624 includes one or more laser(s) 626 and one or more image capture device(s) 628 communicatively coupled to the controller 604. Each laser 626 may be embodied as, or otherwise include, any device or collection of devices capable of emitting ultraviolet, visible, or near infrared light toward obstacles in an agricultural field. Each image capture device 628 may be embodied as, or otherwise include, any device or collection of devices capable of illuminating a viewable area in an agricultural field, sensing light reflected by the obstacles thereto, and processing the signals reflected by the obstacles to develop three-dimensional representations of the obstacles. In some embodiments, each image capture device 628 may be embodied as, or otherwise include, a flash lidar camera that has a light source, a sensor, and a controller. Furthermore, it should be appreciated that in some embodiments, the detection system 624 may include other suitable components in addition to, or as an alternative to, the aforementioned devices, such as one or more phased array(s), microelectromechanical device(s), scanner(s), and photodetector(s), for example.

The illustrative ultrasonic detection system 630 is embodied as, or otherwise includes, any device or collection of devices capable of detecting and/or imaging, based on ultrasonic sound waves, obstacles in an agricultural field that may be encountered by the agricultural implement 102 in use thereof. Such detection can include objects that are completely, or at least partially, positioned, beneath the soil or ground. Information detected or captured by the ultrasonic system 630 can also provide an indication of the rigidity of the detected object relative to the surrounding soil, as well as a depth at which the detected object is submersed beneath, and/or extends into, the soil.

The illustrative ultrasonic detection system 630 includes one or more signal generator(s) 632 and one or more receiver(s) 634 communicatively coupled to the controller 604. Each signal generator 632 may be embodied as, or otherwise include, any device or collection of devices capable of generating and emitting ultrasonic sound waves toward obstacles in an agricultural field. Each receiver 634 may be embodied as, or otherwise include, any device or collection of devices capable of receiving sound waves provided thereto from the obstacles and converting the sound waves into measurable electrical signals. It should be appreciated that in some embodiments, the detection system 630 may include other suitable components in addition to, or as an alternative to, the aforementioned devices, such as one or more signal processor(s), for example.

In the illustrative embodiment, the tool positioning and adjustment mechanisms 636 are embodied as, or otherwise include, devices capable of positioning and/or adjusting components of the agricultural implement 102 (e.g., the shank assemblies 132) based on electrical input provided by the controller 604 in response to sensor input provided to the controller 604 (e.g., from the sensors 302, 304, 402 or the obstacle detection systems 320, 520). In some embodiments, the mechanisms 636 may be embodied as, or otherwise include, one or more electrical actuators and/or solenoids, for example. Additionally, in some embodiments, the mechanisms 636 may be embodied as, include, or otherwise be adapted for use with, one or more linkages, racks, pinions, bars, brackets, rods, gears, pulleys, sprockets, wheels, bearings, shafts, chains, belts, axles, valves, tracks, differentials, or the like.

The dashboard 638 of the illustrative control system 602 includes a display 640 and a user interface 642. The display 640 is configured to output or display various indications, messages, and/or prompts to an operator, which may be generated by the control system 602. The user interface 642 is configured to provide various inputs to the control system 602 based on various actions, which may include actions performed by an operator.

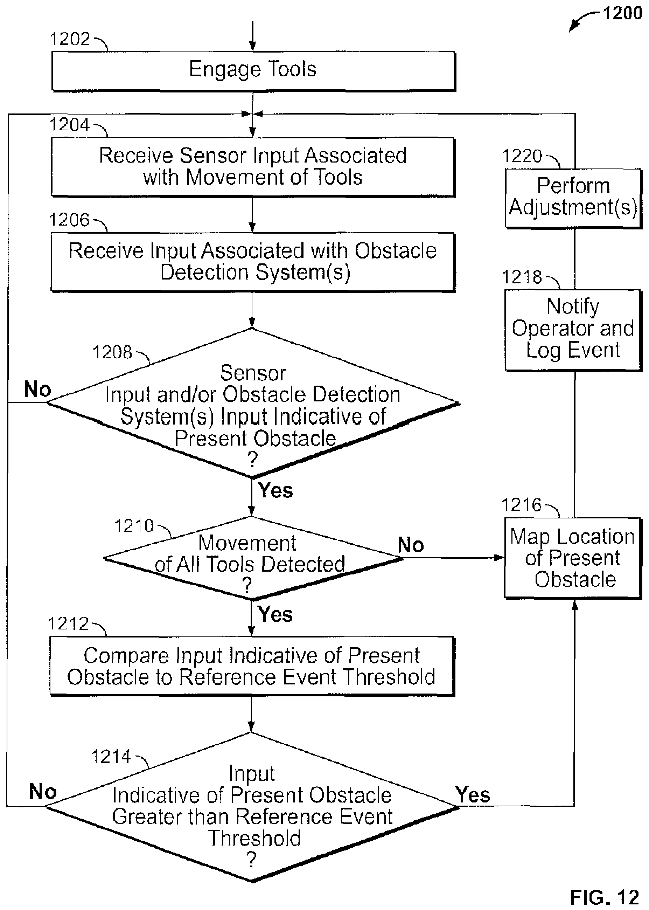

The illustrative location system 644 includes the GPS 530 and the antennas 532, 534. The location system 644 is capable of providing a location of the tractor 400 and/or the implement 102 to the controller 604 in use of the work machine 100. As described in greater detail below with reference to at least FIGS. 12, 13, and 15, with the aid of the location system 644, the controller 604 is configured to map a location of one or more obstacles present in an agricultural field to generate event data for the field, including the location of objects that were detected by the obstacle detection system 520, 1420 while the work machine 100 and/or associated agricultural implement 102 was/were moving along the field.

The receiver unit 646 may be included in the control system 602 in some embodiments as indicated above. Of course, it should be appreciated that in other embodiments, the receiver unit 646 may be omitted from the control system 602. In some embodiments, the receiver unit 646 may include a light receiver 648 that is configured to receive light and/or energy originating from, or otherwise provided by, the camera detection system 610. Additionally, in some embodiments, the receiver unit 646 may include a radio wave receiver 650 that is configured to receive radar signals originating from, or otherwise provided by, the radar detection system 616. Furthermore, in some embodiments, the receiver unit 646 may include an ultrasonic sound wave receiver 652 that is configured to receive ultrasonic sound waves originating from, or otherwise provided by, the ultrasonic detection system 630. Finally, in some embodiments, the receiver unit 646 may include a laser receiver 654 that is configured to receive ultraviolet, visible, or near infrared light originating from, or otherwise provided by, the lidar detection system 624.

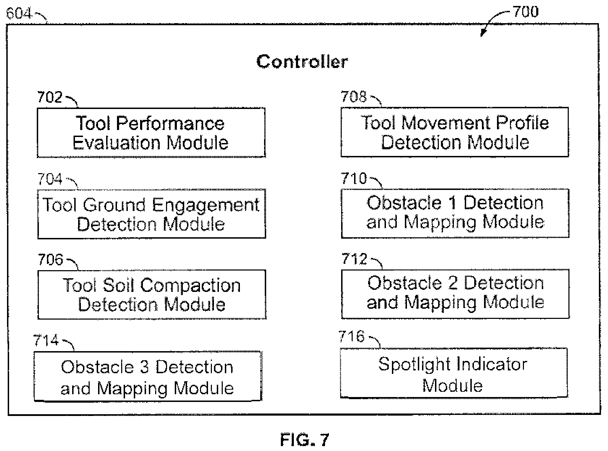

Referring now to FIG. 7, in the illustrative embodiment, the controller 604 establishes an environment 700 during operation. The illustrative environment 700 includes a tool performance evaluation module 702, a tool ground engagement detection module 704, a tool soil compaction detection module 706, a tool movement profile detection module 708, an obstacle detection and mapping module 710, an obstacle detection and mapping module 712, an obstacle and mapping module 714, and a spotlight indicator module 716. Each of the modules, logic, and other components of the environment 700 may be embodied as hardware, firmware, software, or a combination thereof. As such, in some embodiments, one or more modules of the environment 700 may be embodied as circuitry or a collection of electrical devices. In such embodiments, one or more of the tool performance evaluation module 702, the tool ground engagement detection module 704, the tool soil compaction detection module 706, the tool movement profile detection module 708, the obstacle detection and mapping module 710, the obstacle detection and mapping module 712, the obstacle and mapping module 714, and the spotlight indicator module 716 may form a portion of the processor(s) 608 and/or other components of the controller 604. Additionally, in some embodiments, one or more of the illustrative modules may form a portion of another module and/or one or more of the illustrative modules may be independent of one another. Further, in some embodiments, one or more of the modules of the environment 700 may be embodied as virtualized hardware components or emulated architecture, which may be established and maintained by the processor(s) 608 or other components of the controller 604.

The tool performance evaluation module 702, which may be embodied as hardware, firmware, software, virtualized hardware, emulated architecture, and/or a combination thereof as discussed above, is configured to analyze movement of the ground engagement tools 130 relative to one another and/or to analyze movement of a particular ground engagement tool 130 with respect to its performance history based on the sensor input provided by the sensor(s) 302. To do so, in the illustrative embodiment, the tool performance evaluation module 702 may perform the method described below with reference to FIG. 8.

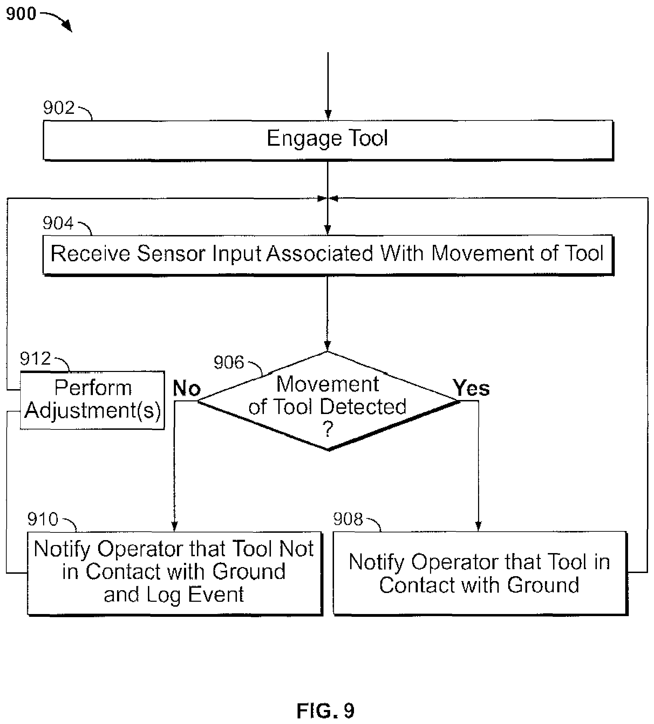

The tool ground engagement detection module 704, which may be embodied as hardware, firmware, software, virtualized hardware, emulated architecture, and/or a combination thereof as discussed above, is configured to determine whether a particular ground engagement tool 130 is in contact with the ground based on the sensor input provided by the sensor 302. To do so, in the illustrative embodiment, the tool ground engagement detection module 704 may perform the method described below with reference to FIG. 9.

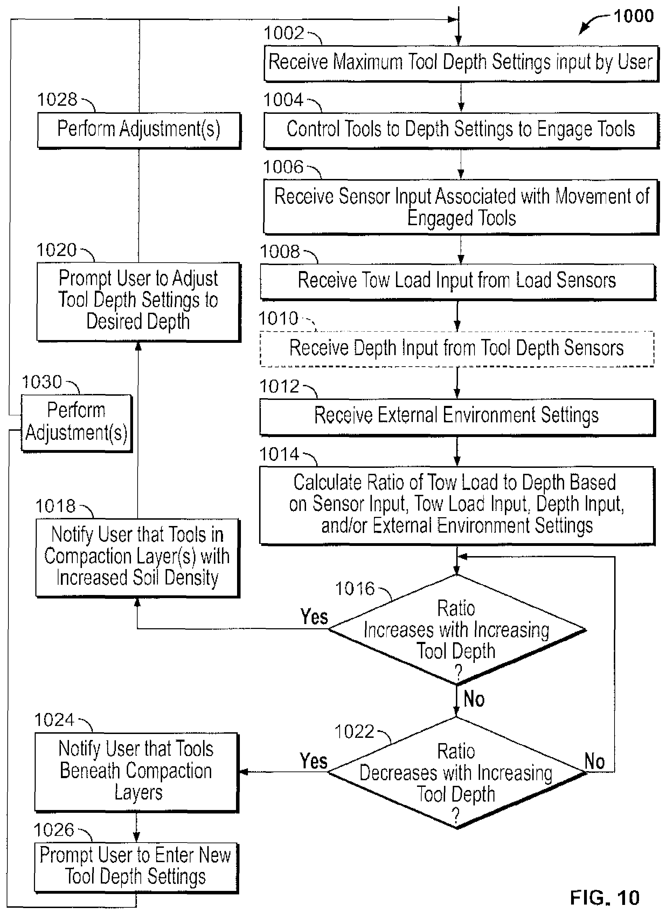

The tool soil compaction detection module 706, which may be embodied as hardware, firmware, software, virtualized hardware, emulated architecture, and/or a combination thereof as discussed above, is configured to determine whether one or more ground engagement tools 130 are positioned in one or more soil compaction layers based on, among other things, sensor input provided by the sensors 302, 402, and in some embodiments, based on input provided by the sensors 304. To do so, in the illustrative embodiment, the tool soil compaction detection module 706 may perform the method described below with reference to FIG. 10.

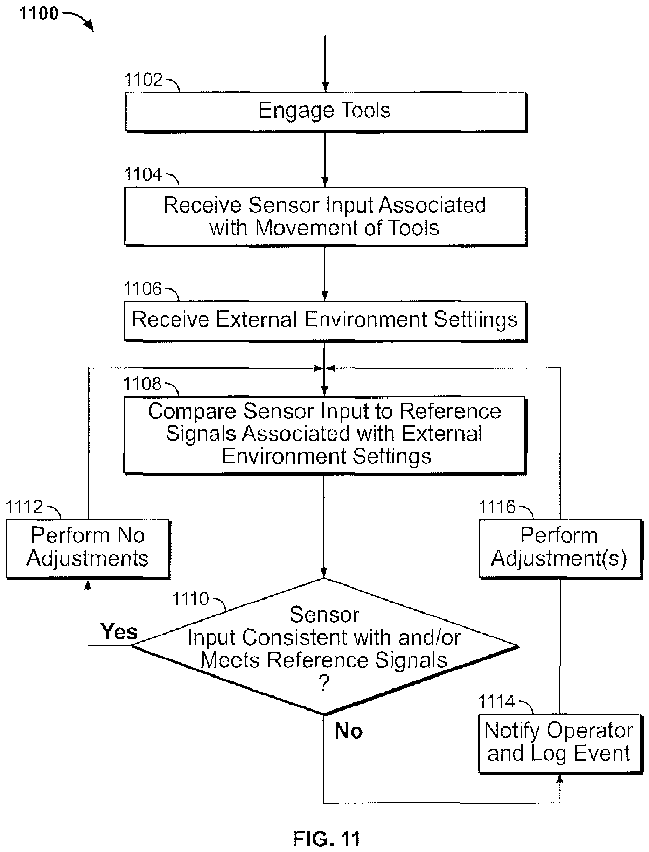

The tool movement profile detection module 708, which may be embodied as hardware, firmware, software, virtualized hardware, emulated architecture, and/or a combination thereof as discussed above, is configured to determine whether movement of the ground engagement tools 130 is consistent with and/or meets reference signals based on, among other things, sensor input provided by the sensors 302. To do so, in the illustrative embodiment, the tool movement profile detection module 708 may perform the method described below with reference to FIG. 11.

The obstacle detection and mapping module 710, which may be embodied as hardware, firmware, software, virtualized hardware, emulated architecture, and/or a combination thereof as discussed above, is configured to selectively map, based on sensor input from the sensors 302 and detection input from one of the obstacle detection systems 320, 520, the location(s) of one or more obstacles present in an agricultural field. To do so, in the illustrative embodiment, the obstacle detection and mapping module 710 may perform the method described below with reference to FIG. 12.

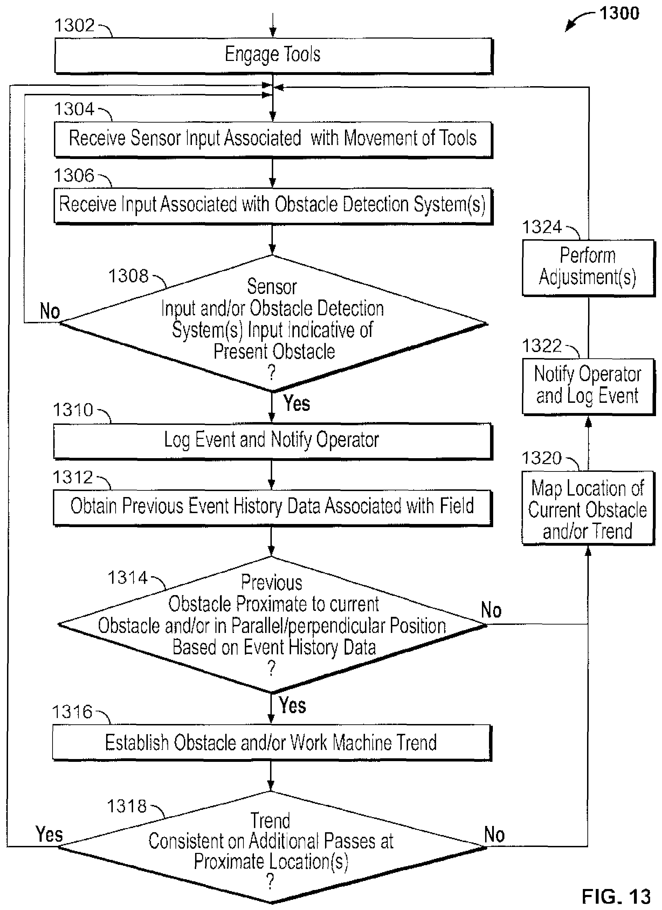

The obstacle detection and mapping module 712, which may be embodied as hardware, firmware, software, virtualized hardware, emulated architecture, and/or a combination thereof as discussed above, is configured to selectively map, based on sensor input from the sensors 302, detection input from one of the obstacle detection systems 320, 520, and event history data associated with a particular field, the location(s) of one or more obstacles present in an agricultural field. To do so, in the illustrative embodiment, the obstacle detection and mapping module 712 may perform the method described below with reference to FIG. 13.

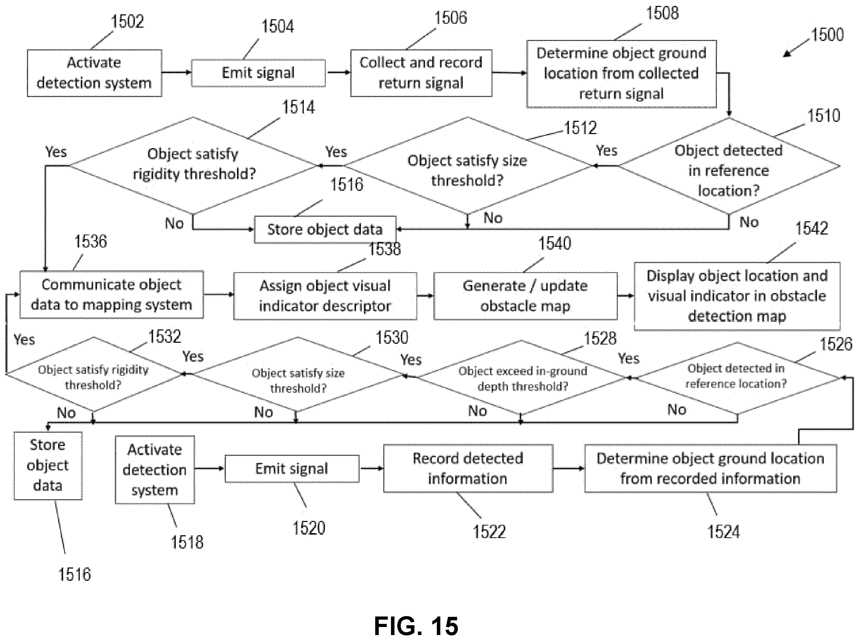

The obstacle detection and mapping module 714, which may be embodied as hardware, firmware, software, virtualized hardware, emulated architecture, and/or a combination thereof as discussed above, is configured to selectively map one or more obstacles present in an agricultural field. Such mapping can be based on vent history data associated with a particular field as well as sensor input from the sensors detection input from one or more sensors of the obstacle detection systems 320, 520, 1420 (FIG. 14A) that detect the presence of an object positioned on, protruding from, and/or positioned beneath the surface of the ground, and/or that detect the rigidity of a detected object. To do so, in the illustrative embodiment, the obstacle detection and mapping module 714 may perform the method described below with reference to FIG. 15. Additionally, while the obstacle detection and mapping module 714 is illustrated and discussed below with respect to being part of the controller 604, according to other embodiments, the obstacle detection and mapping module 714 may be part of another device, including, for example, a drone that may be used to collect information regarding obstacles that may be above, partially beneath, and/or completely below the surface of the ground at and/or around an area at which the work machine 100 and/or implement 102 will travel.

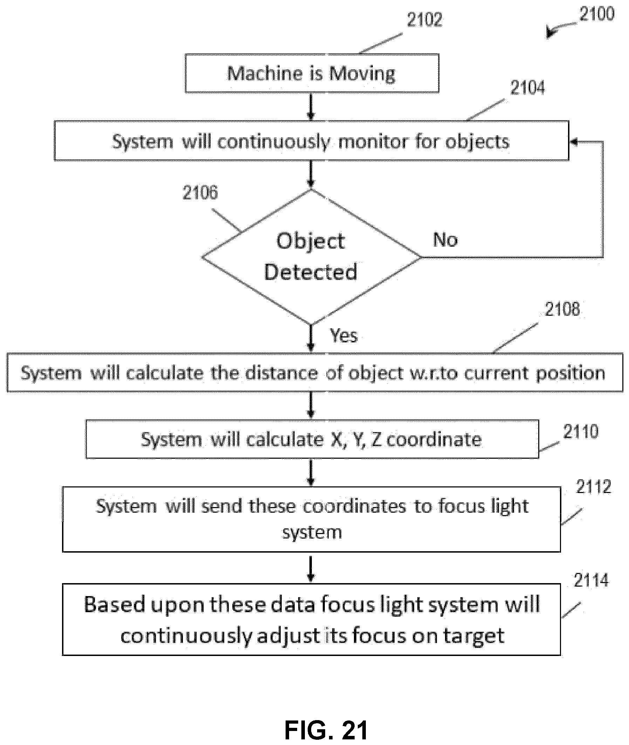

The spotlight indicator module 716, which may be embodied as hardware, firmware, software, virtualized hardware, emulated architecture, and/or a combination thereof as discussed above, is configured to selectively illuminate an area or detected object positioned on and/or protruding from the surface of the ground, and can also provide an audible and/or visual alert to an operator of the work vehicle 100 of the presence of, and/or a reduction in the proximity to, the detected object. To do so, in the illustrative embodiment, the spotlight indicator module 716 may perform the method described below with reference to FIG. 21.

Referring now to FIG. 8, an illustrative method 800 of operating the work machine 100 may be embodied as, or otherwise include, a set of instructions that are executable by the control system 602 (i.e., the tool performance evaluation module 702 of the controller 604). The method 800 corresponds to, or is otherwise associated with, performance of the blocks described below in the illustrative sequence of FIG. 8. It should be appreciated, however, that the method 800 may be performed in one or more sequences different from the illustrative sequence.

The illustrative method 800 begins with block 802. In block 802, the controller 604 engages, or directs engagement of, the ground engagement tools 130. To do so, the controller 604 may move, or direct movement of, each of the shank assemblies 132 to the ripping position 152. From block 802, the method 800 subsequently proceeds to block 804.

In block 804 of the illustrative method 800, the controller 604 receives the sensor input provided by the movement sensors 302. From block 804, the method 800 subsequently proceeds to block 806.

In block 806 of the illustrative method 800, the controller 604 determines, based on the sensor input provided in block 804, whether movement of each of the ground engagement tools 130 is detected by the sensors 302. Put another way, in block 806, based on the sensor input provided in block 804, the controller 604 determines whether movement of all the ground engagement tools 130 is detected by the sensors 302. If the controller 604 determines in block 806 that movement of each of the tools 130 is detected by the sensors 302, the method 800 subsequently proceeds to block 808 or block 814. Of course, it should be appreciated that in response to a determination by the controller 604 in block 806 that movement of each of the tools 130 is detected by the sensors 302, blocks 808 and 814 may be performed substantially contemporaneously and/or in parallel with one another.

In block 808 of the illustrative method 800, the controller 604 analyzes, based on the sensor input provided by the sensors 302, movements of the ground engagement tools 130 relative to one another to evaluate performance uniformity of the work machine 100 across each row 432. Therefore, in block 808, the controller 604 may analyze relative movements of the tools 130 arranged in each row 432 to evaluate the health and/or performance of those tools 130. In any case, from block 808, the method 800 subsequently proceeds to block 810.

In block 810 of the illustrative method 800, the controller 604 determines whether movements of the ground engagement tools 130 relative to one another fall within one or more reference tolerances. It should be appreciated that to perform block 810, the controller 604 may compare the relative movements of the tools 130 analyzed in block 808 to the one or more reference tolerances. If the controller 604 determines in block 810 that the movements of the tools 130 relative to one another fall within the one or more reference tolerances, the method 800 subsequently proceeds to block 812.

In block 812 of the illustrative method 800, the controller 604 notifies an operator (e.g., via the dashboard 638) that no adjustments to the agricultural implement 102 (i.e., to the ground engagement tools 130) need to be performed. Following completion of block 812, the method 800 subsequently returns to block 808.

Returning to block 806, if the controller 604 determines in block 806 that movement of each of the tools 130 is detected by the sensors 302, in some embodiments, the illustrative method 800 proceeds to block 814. In block 814, the controller 604 obtains performance history data for each ground engagement tool 130. It should be appreciated that in some embodiments, performance history data for each tool 130 may be stored in a database or repository that may be accessed by the controller 604. For example, performance history data for each tool 130 may be stored in a database accessible at myjohndeere.com, or another suitable location. In any case, the performance history data for each tool 130 is indicative of characteristics of movement (e.g., sensor input from the corresponding sensor 302) for the corresponding tool 130 in one or more previous operational states. From block 814, the method 800 subsequently proceeds to block 816.

In block 816 of the illustrative method 800, the controller 604 analyzes movement of each of the ground engagement tools 130 in a current operational state based on the sensor input associated with the corresponding sensor 302 and the performance history data associated with the corresponding tool 130. It should be appreciated that to do so, the controller 604 may compare the sensor input provided by the sensor 302 for the corresponding tool 130 in the current operational state to the performance history data associated with the corresponding tool 130. From block 816, the method 800 subsequently proceeds to block 818.

In block 818 of the illustrative method 800, the controller 604 determines whether, based on the sensor input provided by the corresponding sensor 302 and the performance history data associated with the particular ground engagement tool 130, movement of the tool 130 in the current operational state is outside of, or inconsistent with, movement of the tool 130 in one or more previous operational states. If the controller 604 determines in block 818 that movement of the particular tool 130 in the current operational state is outside, or inconsistent with, movement of the tool 130 in one of more previous operational states, the method 800 subsequently proceeds to block 820.

In block 820 of the illustrative method 800, the controller 604 determines whether, based on the sensor input provided by multiple sensors 302 and the performance history data associated with multiple ground engagement tools 130, movement of multiple tools 130 in their corresponding current operational states are outside of, or inconsistent with, movements of those tools 130 in one or more previous operational states. If the controller 604 determines in block 820 that movements of multiple tools 130 in their corresponding current operational states are outside of, or inconsistent with, movements of those tools 130 in one or more previous operational states, the method 800 subsequently proceeds to block 822.

In block 822 of the illustrative method 800, the controller 604 determines whether, based on the sensor input provided by each of the sensors 302 and the performance history data associated with each of the ground engagement tools 130, movement of each of the tools 130 in its corresponding current operational state is outside of, or inconsistent with, movement of each of the tools 130 in one or more previous operational states. If the controller 604 determines in block 822 that movement of each of the tools 130 in its corresponding current operational state is outside of, or inconsistent with, movement of each of the tools 130 in one or more previous operational states, the method 800 subsequently proceeds to block 824.

In block 824 of the illustrative method 800, the controller 604 determines whether one or more settings of each of the ground engagement tools 130 has changed (e.g., due to operator action). If the controller 604 determines in block 824 that one or more settings of all the tools 130 have changed, the method 800 subsequently proceeds to block 826.

In block 826 of the illustrative method 800, the controller 604 notifies an operator (e.g., via the dashboard 638) that no adjustments to the agricultural implement 102 (i.e., to the ground engagement tools 130) need to be performed. Following completion of block 826, the method 800 subsequently returns to block 818.

Returning to block 824 of the illustrative method 800, if the controller 604 determines in block 824 that one or more settings of all the tools 130 have not changed, the method 800 proceeds to block 828. In block 828, the controller 604 determines whether the external environment has changed. The external environment may correspond to, or otherwise be associated with, characteristics of the agricultural field and/or the ambient environment. Additionally, the external environment may be characterized by, or otherwise take into account, parameters such as temperature, humidity, precipitation, visibility, pressure, wind, known locations of obstacles in the field, known trends or patterns associated with particular obstacles, and/or any other parameters of interest. It should be appreciated that settings and/or parameters characterizing the external environment may be changed by an operator via the dashboard 638, at least in some embodiments. In any case, if the controller 604 determines in block 828 that the external environment has changed, the method 800 subsequently proceeds to block 826. However, if the controller 604 determines in block 828 that the external environment has not changed, the method 800 subsequently proceeds to block 830.

In block 830 of the illustrative method 800, the controller 604 notifies an operator of an event (e.g., via the dashboard 638) determined following the performance of block 828. The event notification may indicate that (i) the movement of all tools 130 are outside of, and/or inconsistent with, the performance history data associated therewith (i.e., as determined in block 822), (ii) the settings of the tools 130 have not been changed (i.e., as determined in block 824), and (iii) the external environment has not changed (i.e., as determined in block 828). In addition, in block 830, the controller 604 generates a log or flag associated with the event, which may be displayed on the dashboard 638 and/or stored in a database accessible by the controller 604 (e.g., a database accessible at myjohndeere.com). Following completion of block 830, the method 800 subsequently returns to block 818.

Returning to block 810 of the illustrative method 800, if the controller 604 determines in block 810 that movements of the ground engagement tools 130 relative to one another are not within, or fall outside of, the reference tolerances, the method 800 subsequently proceeds to block 832. In block 832, the controller 604 notifies an operator of an event (e.g., via the dashboard 638) determined following the performance of block 810. The event notification may indicate that relative movements of the ground engagement tools 130 are not within the reference tolerances (i.e., as determined in block 810). In addition, in block 832, the controller 604 generates a log or flag associated with the event, which may be displayed on the dashboard 638 and/or stored in a database accessible by the controller 604 (e.g., a database accessible at myjohndeere.com). Following completion of block 832, at least in some embodiments, the method 800 subsequently proceeds to block 834.

In block 834 of the illustrative method 800, the controller 604 may perform an automated adjustment to the agricultural implement 102 (i.e., to the ground engagement tools 130). As depicted in FIG. 8, the illustrative method 800 includes blocks 832 and 834. It should be appreciated that in at least some embodiments, performance of the illustrative method 800 by the controller 604 may not require the performance of blocks 832 and 834. Rather, in such embodiments, block 832 or block 834 may be performed by the controller 604. In any case, in the illustrative embodiment, following completion of block 834, the method 800 subsequently returns to block 808.

Returning to block 806 of the illustrative method 800, if the controller 604 determines in block 806 that movement of each of the ground engagement tools 130 is not detected based on the sensor input provided by the sensors 302, the method 800 subsequently proceeds to block 836. In block 836, the controller 604 notifies an operator of an event (e.g., via the dashboard 638) determined following the performance of block 806. The event notification may indicate that movement of each of the tools 130 is not detected (i.e., as determined in block 806). In addition, in block 836, the controller 604 generates a log or flag associated with the event, which may be displayed on the dashboard 638 and/or stored in a database accessible by the controller 604 (e.g., a database accessible at myjohndeere.com). Following completion of block 836, at least in some embodiments, the method 800 subsequently proceeds to block 838.

In block 838 of the illustrative method 800, the controller 604 may perform an automated adjustment to the agricultural implement 102 (i.e., to the ground engagement tools 130). As depicted in FIG. 8, the illustrative method 800 includes blocks 836 and 838. It should be appreciated that in at least some embodiments, performance of the illustrative method 800 by the controller 604 may not require the performance of blocks 836 and 838. Rather, in such embodiments, block 836 or block 838 may be performed by the controller 604. In any case, in the illustrative embodiment, following completion of block 838, the method 800 subsequently returns to block 804.

Referring now to FIG. 9, an illustrative method 900 of operating the work machine 100 may be embodied as, or otherwise include, a set of instructions that are executable by the control system 602 (i.e., the tool ground engagement detection module 704 of the controller 604). The method 900 corresponds to, or is otherwise associated with, performance of the blocks described below in the illustrative sequence of FIG. 9. It should be appreciated, however, that the method 900 may be performed in one or more sequences different from the illustrative sequence.

The illustrative method 900 begins with block 902. In block 902, the controller 604 engages, or directs engagement of, the ground engagement tools 130. To do so, the controller 604 may move, or direct movement of, each of the shank assemblies 132 to the ripping position 152. From block 902, the method 900 subsequently proceeds to block 904.

In block 904 of the illustrative method 900, the controller 604 receives the sensor input provided by the movement sensors 302. From block 904, the method 900 subsequently proceeds to block 906.

In block 906 of the illustrative method 900, the controller 604 determines, based on the sensor input provided in block 904, whether movement of a particular ground engagement tool 130 is detected by the corresponding sensor 302. If the controller 604 determines in block 906 that movement of the particular ground engagement tool 130 is detected by the corresponding sensor 302, the method 900 subsequently proceeds to block 908.

In block 908 of the illustrative method 900, the controller 604 notifies an operator (e.g., via the dashboard 638) that the particular tool 130 is in contact with the ground. From block 908, the method 900 subsequently returns to block 904.

Returning to block 906 of the illustrative method 900, if the controller 604 determines in block 906 that movement of the particular tool 130 is not detected, the method 900 subsequently proceeds to block 910. In block 910, the controller 604 notifies an operator of an event (e.g., via the dashboard 638) determined following the performance of block 906. The event notification may indicate that movement of the particular tool 130 is not detected (i.e., as determined in block 906). In addition, in block 910, the controller 604 generates a log or flag associated with the event, which may be displayed on the dashboard 638 and/or stored in a database accessible by the controller 604 (e.g., a database accessible at myjohndeere.com). Following completion of block 910, in at least some embodiments, the method 900 subsequently proceeds to block 912.

In block 912 of the illustrative method 900, the controller 604 may perform an automated adjustment to the agricultural implement 102 (i.e., to the ground engagement tools 130). As depicted in FIG. 9, the illustrative method 900 includes blocks 910 and 912. It should be appreciated that in at least some embodiments, performance of the illustrative method 900 by the controller 604 may not require the performance of blocks 910 and 912. Rather, in such embodiments, block 910 or block 912 may be performed by the controller 604. In any case, in the illustrative embodiment, following completion of block 912, the method 900 subsequently returns to block 904.

Referring now to FIG. 10, an illustrative method 1000 of operating the work machine 100 may be embodied as, or otherwise include, a set of instructions that are executable by the control system 602 (i.e., the tool soil compaction detection module 706 of the controller 604). The method 1000 corresponds to, or is otherwise associated with, performance of the blocks described below in the illustrative sequence of FIG. 10. It should be appreciated, however, that the method 1000 may be performed in one or more sequences different from the illustrative sequence.

The illustrative method 1000 begins with block 1002. In block 1002, the controller 604 receives one or more maximum depth settings input by an operator (e.g., via the dashboard 638) for the ground engagement tools 130. It should be appreciated that at least in some embodiments, the maximum depth settings may correspond to a maximum penetration depth of the tools 130 into the ground in use of the work machine 100. From block 1002, the method 1000 subsequently proceeds to block 1004.

In block 1004 of the illustrative method 1000, the controller 604 controls (e.g., sets and/or directs movement of) the tools 130 to the maximum depth settings input in block 1002. To do so, at least in some embodiments, the controller 604 may provide input to the tool positioning and adjustment mechanisms 636 to direct movement of the tools 130. It should be appreciated that as a result of the performance of block 1004, each of the shank assemblies 132 is controlled to the ripping position 152. From block 1004, the method 1000 subsequently proceeds to block 1006.

In block 1006 of the illustrative method 1000, the controller 604 receives the sensor input provided by the movement sensors 302 associated with the engaged (i.e., set in the ripping position 152) ground engagement tools 130. From block 1006, the method 1000 subsequently proceeds to block 1008.

In block 1008 of the illustrative method 1000, the controller 604 receives the tow load sensor input provided by the one or more load sensor(s) 402 in use of the work machine 100. From block 1008, the method 1000 subsequently proceeds to block 1010.

In block 1010 of the illustrative method 1000, the controller 604 receives the depth sensor input provided by the depth sensors 304 associated with the engaged ground engagement tools 130. Of course, as indicated above, in embodiments in which the sensors 304 are omitted from the control system 602, performance of the illustrative method 1000 by the controller 602 may not require the performance of block 1010, and block 1010 may therefore be omitted from the method 1000. In any case, from block 1010, the illustrative method 1000 subsequently proceeds to block 1012.

In block 1012 of the illustrative method 1000, the controller 604 receives one or more external environment settings input by an operator (e.g., via the dashboard 638). The one or more external environment settings may correspond to, or otherwise be associated with, characteristics of the agricultural field and/or the ambient environment. Additionally, the one or more external environment settings may be characterized by, or otherwise take into account, parameters such as temperature, humidity, precipitation, visibility, pressure, wind, known locations of obstacles in the field, known trends or patterns associated with particular obstacles, and/or any other parameters of interest. From block 1012, the method 1000 subsequently proceeds to block 1014.

In block 1014 of the illustrative method 1000, the controller 604 calculates at least one ratio of the tow load associated with the agricultural implement 102 to the position of at least one ground engagement tool 130 relative to the ground (e.g., a penetration depth of the at least one tool 130 into the ground) based on the sensor input provided in blocks 1006, 1008, 1010 and on the external environment settings input in block 1012. Of course, it should be appreciated that in block 1014, the controller 604 may calculate a ratio corresponding to each ground engagement tool 130. Additionally, in embodiments in which the sensors 304 are omitted from the control system 602, the calculation performed by the controller 604 in block 1014 may not be based on sensor input provided by the sensors 304. In any case, from block 1014, the method 1000 subsequently proceeds to block 1016.

In block 1016 of the illustrative method 1000, the controller 604 determines whether the at least one ratio calculated in block 1014 increases as the at least one ground engagement tool 130 extends farther (i.e., penetrates deeper) into the ground. If the controller 604 determines in block 1016 that the ratio increases as the at least one tool 130 extends farther into the ground, the method 1000 subsequently proceeds to block 1018.

In block 1018 of the illustrative method 1000, the controller 604 notifies an operator (e.g., via the dashboard 638) that one or more ground engagement tools 130 are located in one or more compaction layer(s) of the ground having increased soil density (i.e., relative to other non-compaction layer(s) of the ground). From block 1018, the method 1000 subsequently proceeds to block 1020.

In block 1020 of the illustrative method 1000, the controller 604 prompts an operator (e.g., via a prompt or notification displayed on the dashboard 638) to adjust the maximum depth settings of the ground engagement tools 130 to a desired depth in view of the notification performed in block 1018. Following completion of block 1020, at least in some embodiments, the method 1000 subsequently proceeds to block 1028.

In block 1028 of the illustrative method 1000, the controller 604 may perform an automated adjustment to the agricultural implement 102 (i.e., to the ground engagement tools 130). As depicted in FIG. 10, the illustrative method 1000 includes blocks 1020 and 1028. It should be appreciated that in at least some embodiments, performance of the illustrative method 1000 by the controller 604 may not require the performance of blocks 1020 and 1028. Rather, in such embodiments, block 1020 or block 1028 may be performed by the controller 604. In any case, in the illustrative embodiment, following completion of block 1028, the method 1000 subsequently returns to block 1002.

Returning to block 1016 of the illustrative method 1000, if the controller 604 determines in block 1016 that the at least one ratio calculated in block 1014 does not increase as the least one ground engagement tool 130 extends farther into the ground, the method 1000 subsequently proceeds to block 1022. In block 1022, the controller 604 determines whether the at least one ratio calculated in block 1014 decreases as the at least one tool 130 extends farther into the ground. If the controller 604 determines in block 1022 that the at least one ratio calculated in block 1014 decreases as the at least one tool 130 extends farther into the ground, the method 1000 subsequently proceeds to block 1024.

In block 1024 of the illustrative method 1000, the controller 604 notifies an operator (e.g., via the dashboard 638) that one or more ground engagement tools 130 are located beneath one or more compaction layers of the ground. From block 1024, the method 1000 subsequently proceeds to block 1026.

In block 1026 of the illustrative method 1000, the controller 604 prompts an operator (e.g., via a prompt or notification displayed on the dashboard 638) to enter new settings for the maximum depth of the ground engagement tools 130. Following completion of block 1026, in at least some embodiments, the method 1000 subsequently proceeds to block 1030.

In block 1030 of the illustrative method 1000, the controller 604 may perform an automated adjustment to the agricultural implement 102 (i.e., to the ground engagement tools 130). As depicted in FIG. 10, the illustrative method 1000 includes blocks 1026 and 1030. It should be appreciated that in at least some embodiments, performance of the illustrative method 1000 by the controller 604 may not require the performance of blocks 1026 and 1030. Rather, in such embodiments, block 1026 or block 1030 may be performed by the controller 604. In any case, in the illustrative embodiment, following completion of block 1030, the method 1000 subsequently returns to block 1002.

Returning to block 1022 of the illustrative method 1000, if the controller 604 determines in block 1022 that the at least one ratio calculated in block 1014 does not decrease as the at least one ground engagement tool 130 extends farther into the ground, the method 1000 subsequently returns to block 1016.

Referring now to FIG. 11, an illustrative method 1100 of operating the work machine 100 may be embodied as, or otherwise include, a set of instructions that are executable by the control system 602 (i.e., the tool movement profile detection module 708 of the controller 604). The method 1100 corresponds to, or is otherwise associated with, performance of the blocks described below in the illustrative sequence of FIG. 11. It should be appreciated, however, that the method 1100 may be performed in one or more sequences different from the illustrative sequence.

The illustrative method 1100 begins with block 1102. In block 1102, the controller 604 engages, or directs engagement of, the ground engagement tools 130. To do so, the controller 604 may move, or direct movement of, each of the shank assemblies 132 to the ripping position 152. From block 1102, the method 1100 subsequently proceeds to block 1104.

In block 1104 of the illustrative method 1100, the controller 604 receives the sensor input provided by the movement sensors 302 associated with the engaged (i.e., set in the ripping position 152) ground engagement tools 130. From block 1104, the method 1100 subsequently proceeds to block 1106.

In block 1106 of the illustrative method 1100, the controller 604 receives one or more external environment settings input by an operator (e.g., via the dashboard 638). The one or more external environment settings may correspond to, or otherwise be associated with, characteristics of the agricultural field and/or the ambient environment. Additionally, the one or more external environment settings may be characterized by, or otherwise take into account, parameters such as temperature, humidity, precipitation, visibility, pressure, wind, known locations of obstacles in the field, known trends or patterns associated with particular obstacles, and/or any other parameters of interest. From block 1106, the method 1100 subsequently proceeds to block 1108.

In block 1108 of the illustrative method 1100, the controller 604 compares the sensor input provided by the sensors 302 associated with the ground engagement tools 130 to reference signals associated with the external environment settings input by the operator in block 1106. From block 1108, the method 1100 subsequently proceeds to block 1110.

In block 1110 of the illustrative method 1100, the controller 604 determines whether the sensor input provided by the sensors 302 is consistent with, and/or meets, the reference signals associated with the external environment settings input in block 1106. It should be appreciated that, at least in some embodiments, the controller 604 may perform block 1110 to evaluate performance of the agricultural implement 102 in certain operational states, which may correspond to, or otherwise be associated with, the external environment settings input in block 1106. In any case, if the controller 604 determines in block 1110 that the sensor input provided by the sensors 302 is consistent with, and/or meets, the reference signals associated with the external environment settings, the method 1100 subsequently proceeds to block 1112.

In block 1112 of the illustrative method 1100, the controller 604 notifies an operator (e.g., via the dashboard 638) that no adjustments to the agricultural implement 102 (i.e., to the ground engagement tools 130) need to be performed. Following completion of block 1112, the method 1100 subsequently returns to block 1108.

Returning to block 1110 of the illustrative method 1100, if the controller 604 determines in block 1110 that the sensor input provided by the sensors 302 is not consistent with, and/or meets, the reference signals associated with the external environment settings, the method 1100 subsequently proceeds to block 1114. In block 114, the controller 604 notifies an operator of an event (e.g., via the dashboard 638) determined following the performance of block 1100. The event notification may indicate that the sensor input associated with one or more ground engagement tools 132 is inconsistent with, does not meet, or falls outside of, the reference signals associated with the external environment settings input by the operator in block 1106 (i.e., as determined in block 1110). In addition, in block 1114, the controller 604 generates a log or flag associated with the event, which may be displayed on the dashboard 638 and/or stored in a database accessible by the controller 604 (e.g., a database accessible at myjohndeere.com). Following completion of block 1114, in at least some embodiments, the method 1100 subsequently proceeds to block 1116.

In block 1116 of the illustrative method 1100, the controller 604 may perform an automated adjustment to the agricultural implement 102 (i.e., to the ground engagement tools 130). As depicted in FIG. 11, the illustrative method 1100 includes blocks 1114 and 1116. It should be appreciated that in at least some embodiments, performance of the illustrative method 1100 by the controller 604 may not require the performance of blocks 1114 and 1116. Rather, in such embodiments, block 1114 or block 1116 may be performed by the controller 604. In any case, in the illustrative embodiment, following completion of block 1116, the method 1100 subsequently returns to block 1108.

Referring now to FIG. 12, an illustrative method 1200 of operating the work machine 100 may be embodied as, or otherwise include, a set of instructions that are executable by the control system 602 (i.e., the obstacle detection and mapping module 710 of the controller 604). The method 1200 corresponds to, or is otherwise associated with, performance of the blocks described below in the illustrative sequence of FIG. 12. It should be appreciated, however, that the method 1200 may be performed in one or more sequences different from the illustrative sequence.

The illustrative method 1200 begins with block 1202. In block 1202, the controller 604 engages, or directs engagement of, the ground engagement tools 130. To do so, the controller 604 may move, or direct movement of, each of the shank assemblies 132 to the ripping position 152. From block 1202, the method 1200 subsequently proceeds to block 1204.

In block 1204 of the illustrative method 1200, the controller 604 receives the sensor input provided by the movement sensors 302 associated with the engaged (i.e., set in the ripping position 152) ground engagement tools 130. From block 1204, the method 1200 subsequently proceeds to block 1206.

In block 1206 of the illustrative method 1200, the controller 604 receives the detection input associated with one or more of the obstacle detection systems 320, 520. Of course, it should be appreciated that in block 1206, the controller 604 may receive detection input provided by any one or more of the camera detection system 610, the radar detection system 616, the lidar detection system 624, and the ultrasonic detection system 630. Regardless, from block 1206, the method 1200 subsequently proceeds to block 1208.

In block 1208 of the illustrative method 1200, the controller 604 determines whether the input provided by the sensors 302 in block 1204 and/or the detection input provided by one or more of the detection systems 320, 520 in block 1206 is indicative of one or more obstacles present in the field. If the controller 604 determines in block 1208 that the input provided in block 1204 and/or block 1206 is indicative of one or more present obstacles such that one or more obstacles are identified in the field, the method 1200 subsequently proceeds to block 1210.

In block 1210 of the illustrative method 1200, the controller 604 determines, based on the sensor input provided in block 1204, whether movement of each of the ground engagement tools 130 is detected by the sensors 302. Put another way, in block 1210, based on the sensor input provided in block 1204, the controller 604 determines whether movement of all the ground engagement tools 130 is detected by the sensors 302. If the controller 604 determines in block 1210 that movement of each of the tools 130 is detected by the sensors 302, the method 1200 subsequently proceeds to block 1212.

In block 1212 of the illustrative method 1200, the controller 604 compares the input indicative of the one or more present obstacles (i.e., the input provided by the sensors 302 and/or the obstacle detection systems 320, 520) to a reference event threshold. It should be appreciated that the reference event threshold may correspond to, or otherwise be associated with, a value, a range, or a tolerance. Furthermore, it should be appreciated that input greater than, or otherwise outside of, the reference event threshold may correspond to an operational event and/or fault. From block 1212, the method 1200 subsequently proceeds to block 1214.

In block 1214 of the illustrative method 1200, the controller 604 determines whether the input indicative of the one or more present obstacles is greater than the reference event threshold. If the controller 604 determines in block 1214 that the input is greater than the reference event threshold, the method 1200 subsequently proceeds to block 1216.

In block 1216 of the illustrative method 1200, the controller 604 maps the location of the one or more present obstacles with the aid of the location system 644. It should be appreciated that the location(s) mapped by the controller 604 in block 1216 may be used to generate event data for the field in which the work machine 100 is employed. Furthermore, it should be appreciated that event data generated for a particular field may be displayed on the dashboard 638 and/or stored in a database accessible by the controller 604 (e.g., a database accessible at myjohndeere.com). Following completion of block 1216, the method 1200 subsequently proceeds to block 1218.

In block 1218 of the illustrative method 1200, the controller 604 notifies an operator of an event (e.g., via the dashboard 638) determined following the performance of block 1216. The event notification may indicate that the location of one or more present obstacles have been determined and mapped. In addition, in block 1216, the controller 604 generates a log or flag associated with the event, which may be displayed on the dashboard 638 and/or stored in a database accessible by the controller 604 (e.g., a database accessible at myjohndeere.com). Following completion of block 1218, in at least some embodiments, the method 1200 subsequently proceeds to block 1220. In block 1220 of the illustrative method 1200, the controller 604 may perform an automated adjustment to the agricultural implement 102 (i.e., to the ground engagement tools 130). As depicted in FIG. 12, the illustrative method 1200 includes blocks 1218 and 1220. It should be appreciated that in at least some embodiments, performance of the illustrative method 1200 by the controller 604 may not require the performance of blocks 1218 and 1220. Rather, in such embodiments, block 1218 or block 1220 may be performed by the controller 604. In any case, in the illustrative embodiment, following completion of block 1220, the method 1200 subsequently returns to block 1204.

Returning to block 1214 of the illustrative method 1200, if the controller 604 determines in block 1214 that the input indicative of the one or more present obstacles is not greater than the reference event threshold, the method 1200 subsequently returns to block 1204.

Returning to block 1210 of the illustrative method 1200, if the controller 604 determines in block 1210 that movement of each of the tools 130 is not detected by the sensors 302 such that a lack of movement of at least one of the tools 130 is determined by the controller 604 in block 1210, the method 1200 subsequently proceeds to block 1216.

Returning to block 1208 of the illustrative method 1200, if the controller 604 determines in block 1208 that the input provided in block 1204 and/or block 1206 is not indicative of one or more obstacles present in the field, the method 1200 subsequently returns to block 1204.

Referring now to FIG. 13, an illustrative method 1300 of operating the work machine 100 may be embodied as, or otherwise include, a set of instructions that are executable by the control system 602 (i.e., the obstacle detection and mapping module 712 of the controller 604). The method 1300 corresponds to, or is otherwise associated with, performance of the blocks described below in the illustrative sequence of FIG. 13. It should be appreciated, however, that the method 1300 may be performed in one or more sequences different from the illustrative sequence.

The illustrative method 1300 begins with block 1302. In block 1302, the controller 604 engages, or directs engagement of, the ground engagement tools 130. To do so, the controller 604 may move, or direct movement of, each of the shank assemblies 132 to the ripping position 152. From block 1302, the method 1300 subsequently proceeds to block 1304.

In block 1304 of the illustrative method 1300, the controller 604 receives the sensor input provided by the movement sensors 302 associated with the engaged (i.e., set in the ripping position 152) ground engagement tools 130. From block 1304, the method 1300 subsequently proceeds to block 1306.

In block 1306 of the illustrative method 1300, the controller 604 receives the detection input associated with one or more of the obstacle detection systems 320, 520. Of course, it should be appreciated that in block 1306, the controller 604 may receive detection input provided by any one or more of the camera detection system 610, the radar detection system 616, the lidar detection system 624, and the ultrasonic detection system 630. Regardless, from block 1306, the method 1300 subsequently proceeds to block 1308.

In block 1308 of the illustrative method 1300, the controller 604 determines whether the input provided by the sensors 302 in block 1304 and/or the detection input provided by one or more of the detection systems 320, 520 in block 1306 is indicative of one or more obstacles present in the field. If the controller 604 determines in block 1308 that the input provided in block 1304 and/or block 1306 is indicative of one or more present obstacles such that one or more obstacles are identified in the field, the method 1300 subsequently proceeds to block 1310.

In block 1310 of the illustrative method 1300, the controller 604 notifies an operator of an event (e.g., via the dashboard 638) determined following the performance of block 1308. The event notification may indicate that one or more obstacles have been identified in the field (i.e., as determined in block 1308). In addition, in block 1310, the controller 604 generates a log or flag associated with the event, which may be displayed on the dashboard 638 and/or stored in a database accessible by the controller 604 (e.g., a database accessible at myjohndeere.com). From block 1310, the method 1300 subsequently proceeds to block 1312.

In block 1312 of the illustrative method 1300, the controller 604 obtains event history data for the particular field that is indicative of one or more obstacles previously present in the field. It should be appreciated that in some embodiments, event history data for a particular field may be stored in a database or repository that may be accessed by the controller 604. For example, event history data for a particular field may be stored in a database accessible at myjohndeere.com, or another suitable location. In any case, from block 1312, the method 1300 subsequently proceeds to block 1314.

In block 1314 of the illustrative method 1300, the controller 604 determines whether the position(s) and/or location(s) of the one or more current obstacles associated with the sensor input provided in block 1304 and the detection input provided in block 1306 are proximate to the position(s) and/or location(s) of one or more obstacles associated with the event history data obtained in block 1312. In some embodiments, in block 1314, the controller 604 may determine whether the position(s) and/or location(s) of the one or more current obstacles associated with the sensor input provided in block 1304 and the detection input provided in block 1306 are parallel, or perpendicular, to the position(s) and/or location(s) of one or more obstacles associated with the event history data obtained in block 1312. If the controller 604 determines in block 1314 that the one or more current obstacle(s) are positioned proximate one or more obstacles associated with the event history data, the method 1300 subsequently proceeds to block 1316.

In block 1316 of the illustrative method 1300, the controller 604 establishes an obstacle and/or work machine trend for the particular field based on the position of the one or more obstacles associated with the sensor input provided in block 1304 and the detection input provided in block 1306, and based on the position of the one or more obstacles associated with the event history data obtained in block 1312. It should be appreciated that the trend established by the controller 604 in block 1316 may be stored in a database or repository that may accessed by the controller 604 during subsequent use of the work machine 100. From block 1316, the method 1300 subsequently proceeds to block 1318.

In block 1318 of the illustrative method 1300, the controller 604 determines whether the trend established in block 1316 is consistent (i.e., whether obstacles associated with that trend are repeatedly identified) upon additional passes when the work machine 100 is positioned proximate to the locations associated with the established trend. If the controller 604 determines in block 1318 that the trend established in block 1316 is consistent upon additional passes, the method 1300 subsequently returns to block 1304.

If the controller 604 determines in block 1318 that the trend established in block 1316 is not consistent upon additional passes, the method 1300 subsequently proceeds to block 1320. In block 1320, the controller 604 maps the location of the one or more current obstacles with the aid of the location system 644. It should be appreciated that the location(s) mapped by the controller 604 in block 1320 may be used to generate event data for the field in which the work machine 100 is employed. Furthermore, it should be appreciated that event data generated for a particular field may be displayed on the dashboard 638 and/or stored in a database accessible by the controller 604 (e.g., a database accessible at myjohndeere.com). In any case, from block 1320, the method 1300 subsequently proceeds to block 1322.

In block 1322 of the illustrative method 1300, the controller 604 notifies an operator of an event (e.g., via the dashboard 638) determined following the performance of block 1320. The event notification may indicate that one or more obstacles and/or obstacle trends have been mapped (i.e., as performed in block 1320). In addition, in block 1322, the controller 604 generates a log or flag associated with the event, which may be displayed on the dashboard 638 and/or stored in a database accessible by the controller 604 (e.g., a database accessible at myjohndeere.com). From block 1322, in at least some embodiments, the method 1300 subsequently proceeds to block 1324.

In block 1324 of the illustrative method 1300, the controller 604 may perform an automated adjustment to the agricultural implement 102 (i.e., to the ground engagement tools 130). As depicted in FIG. 13, the illustrative method 1300 includes blocks 1322 and 1324. It should be appreciated that in at least some embodiments, performance of the illustrative method 1300 by the controller 604 may not require the performance of blocks 1322 and 1324. Rather, in such embodiments, block 1322 or block 1324 may be performed by the controller 604. In any case, in the illustrative embodiment, following completion of block 1324, the method 1300 subsequently returns to block 1304.

Returning to block 1314 of the illustrative method 1300, if the controller 604 determines in block 1314 that the one or more current obstacle(s) are not positioned proximate one or more obstacles associated with the event history data, the method 1300 subsequently proceeds to block 1320.

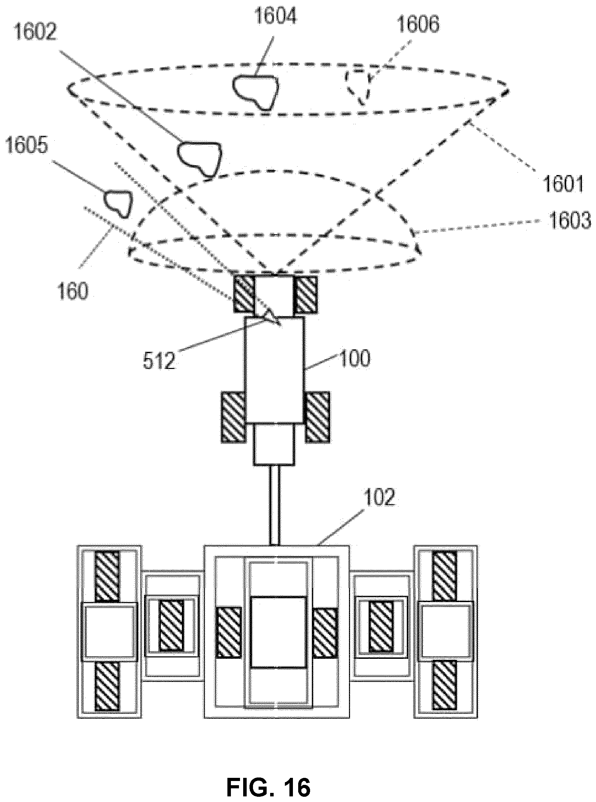

FIG. 14A is a diagrammatic view of a modified portion of the control system 602 shown in FIG. 6 for the work machine 100 that includes the work implement 102 shown in FIG. 1. The features illustrated in FIG. 14A can be utilized as an alternative, or as an addition, to the features of the control system 602, including the obstacle detection systems 320, 520, that are illustrated and discussed above with respect to FIG. 6. Thus, according to certain embodiments, the obstacle detection system 1420 can be adapted to operate with, or be part of, the control system 602 and associated features that are discussed above with respect to at least FIGS. 6 and 7, including, for example, being operating in connection with, and/or utilizing, the controller 604, location system 644, tool positioning and adjustment mechanism 636, and/or receiver unit 646, among other components and features of the control system 602. Additionally, the obstacle detection system 1420 can be located at positions that are the same as, or similar to, the locations that are discussed above with respect to the obstacle detection systems 320, 520, including, but not limited to, in or on the cab 410 and/or at or around a front end of the work machine 100. For example, as illustrated by FIG. 16, the obstacle detection system 1420 can be positioned on the work machine 100 to emit signals 1601, 1603 that can detect objects 1602, 1604, 1606 that are positioned at least in front of the work machine 100. Additionally, the obstacle detection system 1420 can be located at a variety of locations about the work machine 100, including, for example, positioned in one or more headlights of the work machine 100.

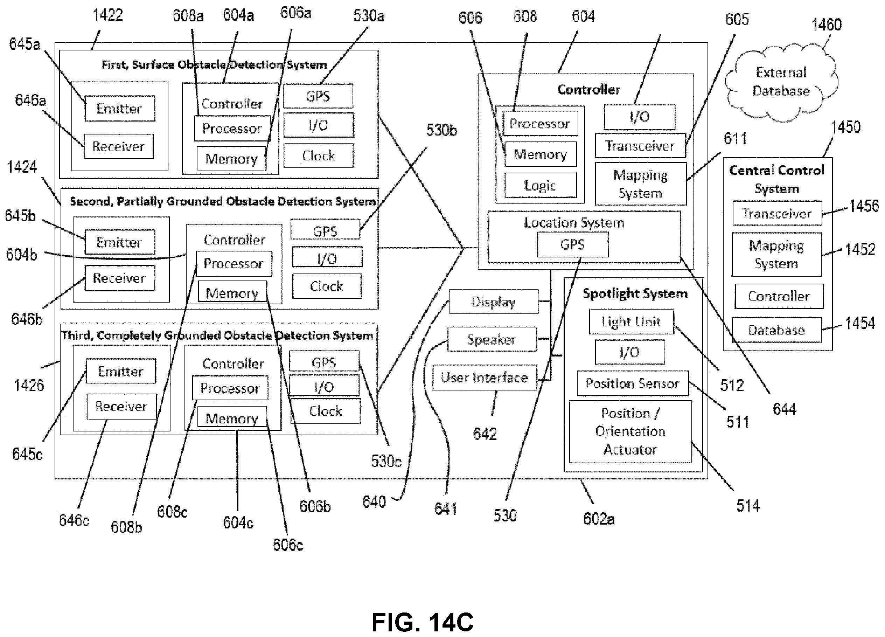

As indicated by FIGS. 14A and 16, the obstacle detection system 1420 is configured to detect objects 1602 that are on, as well as objects 1604, 1606 that are at least partially, if not entirely beneath, the surface of the ground in the area around where the work machine 100 and/or implementation 102 is, or will be, traveling. According to certain embodiments, the obstacle detection system 1420 is configured to detect at least objects that are on the surface of the ground, objects that upwardly extend or protrude from beneath, and extend above, the surface of ground, and objects that are entirely beneath or buried below the surface of the ground. Thus, as seen in FIG. 14A, according to certain embodiments, the obstacle detection system 1420 can include a first detection system 1422, a second detection system 1424, and a third detection system 1426. The first detection system 1422 is adapted to detect objects that are present on the surface of the ground, as well as positioned in the area around where the work vehicle 100 and/or implement 102 is, or will be, traveling. Thus, the first detection system 1422 can be configured to detect objects that are resting on the ground with little or no penetration beneath the surface of the ground. Examples of detection systems suitable for use as the first detection system 1422 include, for example, the camera detection system 610, ultrasonic detection system 630 and the associated receiver unit 646, and/or a pressure detection system that can utilize information, such as sensor input, obtained by one or more pressure sensors 305, as previously discussed. Additionally, according to certain embodiments, the first detection system 1422 can be an ultrasound system. The ultrasound system can utilize an emitter 645a (Fig. 14C), such as, for example, a signal generator, to transmit sound waves that can be detected by the receiver unit 646a (FIG. 14C), such a sound receiver. Characteristics of the received echoes can be evaluated, and/or converted to measureable signals, that can provide an indication of the presence and/or size of a detected object. Information obtained using the first detection system 1422, including associated information received by the receiver unit 646, can be used by the control system 602, including, for example, the controller 604 or processor 608, as well as used with information provided by other components, such as, for example, the location system 644, including, for example, GPS 530 and/or a clock, to determine a location and/or size of the detected object. For example, information obtained by the first detection system 1422, including, for example, a time between when a signal is emitted from the detection system 1422 and the time an associated return signal or echo is detected by the receiver unit 646 and/or an associated signal strength, can provide information regarding a location of and/or distance to the detected object relative to the work machine 100. Such information can be used along with information from the location system 644, including the GPS 530, to determine a particular location of the detected object, such as, for example, GPS coordinates for the detected object. Additionally, characteristics of the signal received by the receiver unit 646, including, but not limited to, the strength of the received signal(s) or data from a captured image, among other types of information, can also be used by at least the controller 604 to determine a size of the detected object.

The obstacle detection system 1420 can also include a second detection system 1424 that is adapted to detect objects that are partially present on or above the surface of the ground and that also downwardly extend beneath the surface of the ground. Again, such detection can relate to objects that are in an area around which the work vehicle 100 and/or implement 102 is, or will be, traveling. Examples of detection systems suitable for use as the second detection system 1424 include, for example, the radar detection system 616, lidar detection system 624 and/or ultrasonic detection system 630, as well as associated components of the receiver unit 646.

As previously discussed, information obtained by the second detection system 1424 can provide, and/or be used in connection with determining a location and size of the detected object that can be both above and beneath the surface of the field. For example, information obtained by the second detection system 1424 can be used by the controller 604 in connection with information from the location system 644, such as the GPS 530 and/or an associated clock, to indicate the location at which the object is present in the field. Further, characteristics or information of the signal detected by the receiver unit 646 can provide an indication of the size of the object and the extent or depth the object does, or does not, extend into the ground.

According to certain embodiments, the radar detection system 616 for the second detection system 1424 can be, or include, a ground penetrating radar (GPR) system. The signal generator 632 of the GPR system can, according to certain embodiments, comprise a transmitter that emits relatively small pulses of energy, such as radio waves, toward and/or into the ground. The receiver unit 646, such as the radio wave receiver 650, for the GPR system can, according to certain embodiments, comprise a receiving antenna that detects and/or records the strength of a reflection or echo signal(s) corresponding to a return of the signal that was emitted from the signal generator 632, as well as provide information used in determining or indicating the time it took for the reflection signal(s) to return to the receiver unit 646. Such information detected or recorded using the receiver unit 646 can be utilized, such as by the controller 604 and/or the processor 608, in determining a location of the object in the field, as well as a depth at which the detected objected is present on and/or beneath the ground. Further, similar to the first detection system 1422, information obtained using the second detection system 1424 can be used to determine a size of the detected object. For example, information detected by the GPR system can be used in connection with the location system 644, including the GPS 530, to determine a location of the detected object.

Additionally, certain detection systems for the second detection system 1424, such as the GPR system, can provide an indication of a rigidity, or a relative rigidity, of the detected object. For example, the density of an object can impact the reflection, refraction, and/or scattering of the signal that was emitted by the signal generator 632, with that impact being reflected in the characteristics of the corresponding echo(es) or sound signal(s) that/are is detected by the receiver unit 646, such as, for example, by the radio wave receiver 650. Thus, the characteristics of the reflection signal, as detected by the receiver unit 646, can provide information that can be analyzed by the controller 604, including the processor 608, to determine the rigidity of the object, or rigidity of the object relative to the surrounding environment, such as, for example, relative to surrounding soil. An indication of the rigidity, or relative rigidity, of the detected object can at least assist in determining the type of detected object, such as, for example, whether the object is stone, clay, or metal, among other types of materials or compositions. Further, having an indication of the size and rigidity of an object can assist in determining a likelihood of damage to the implement 102 were the implement 102 to contact or hit the detected object.

The obstacle detection system 1420 can also include a third detection system 1426 that is adapted to detect objects that are entirely located below the surface of the ground in the area around where the work vehicle 100 and/or implement 102 is, or will be, traveling. Detection systems suitable for use as the third detection system 1426 include, for example, a GPR system, as discussed above, among other types of ground penetrating systems. According to certain embodiments in which the third detection system 1426 utilizes a GPR system, the second detection system 1424 may not include a GPR system, but instead utilize another type of detection system, such as, for example, a lidar detection system 624 and/or an ultrasonic detection system 630.

The type of information obtained or derived from use of a GPR system for the third detection system 1426 can be the same as that described above with respect to the GPR system for the second detection system 1424. Thus, information obtained by the third detection system 1426 can also be used to determine a location at which the detected object is present in the field, as well as the depth that the object is located beneath the ground at a particular location. Further, depending on the detection system, information obtained by the third detection system 1426 can also provide an indication of the rigidity of the detected object, including, for example, the rigidity of the object relative to the surrounding soil.

While the above illustrated embodiments are discussed in terms of using the systems 610, 616, 624, 630 in connection with at least the controller 604, location system 644, and receiver unit 646, and associated features, that are shown and discussed in at least FIG. 6, according to other embodiments, the first, second, and/or third detection systems 1422, 1424, 1426 can utilize dedicated components. For example, as seen in FIG. 14C, according to certain embodiments, a control system 602a one or more of the first, second, and/or third detection systems 1422, 1424, 1426 can each include a controller 604a-c, processor 608a-c, location system, such as, for example, a GPS 530a-c, and/or receiver unit 646a-c that is dedicated for the operations of that particular detection system 1422, 1424, 1426. Thus, emission, generation, and/or transmission of signals discussed above with respect to FIG. 6 can be similarly provided by dedicated emitters 645a-c, and associated detection of echoes or return signals may be performed by dedicated receiver unit 646a-c that is similar to the receiver unit 646, or associated receivers 648, 650, 652, 654, as discussed above. The detection systems 1422, 1424, 1426 may, if applicable to the specific type of detection system being utilized, be capable of determining the size, location, depth, and/or rigidity of the detected object. Such determined information may then be provided by the associated detection system 1422, 1424, 1426 to the controller 604 for at least use in generating a map of the detected object(s).

As previously discussed, the controller 604 can be configured use information obtained by operation of the detection systems 320, 520, 1420 to map a location of one or more obstacles present in an agricultural field and to generate event data for the field. Further, the controller 604 can be configured to generate such an obstacle map, and/or update a preexisting obstacle map, with information regarding the location of objects that are detected by the obstacle detection system 320, 520, 1420 while the work machine 100 and/or associated agricultural implement 102 is currently moving along the field. According to certain embodiments, the controller 604 can map such locations via use of a mapping system 611 that can be embodied as hardware, firmware, software, virtualized hardware, emulated architecture, and/or a combination thereof. Further, while a mapping system 611 is illustrated in FIG. 14A as being part of the controller 604, according to other embodiments, the mapping system 611 may be a separate system or module of the control system 602, and/or provided by an central control system 1450 that is at a location separate, and/or remote from, the work machine 100. For example, the central control system 1450 can be located in a building or facticity that is located near or far from the field(s) or area(s) in which the work machine 100 is/will be operated.

Referencing FIG. 17, the mapping system 611 can be configured to generate an obstacle map 1700 that can be displayed on a display or monitor, such as, for example, the display 640 in the operator cab 410. Such mapping by the mapping system 611 can be based on a variety of different types of information, including, for example, information from the obstacle detective systems 320, 520, 1420, the receiver unit 646, and the location system 644, as well as from associated systems and components. As discussed below, the mapping system 611 can further be configured to generate an obstacle map 1700 that can communicate in a variety of different manners information regarding the size, location, depth beneath surface, and/or relative rigidity of detected objects. Further, the mapping system 611 can be configured to communication such information in a variety of different manners, including, for example, via use of a variety of different colors, line and/or fill patterns, and/or shapes, among other visually distinctive features that convey information particular to specific objects being displayed in the obstacle map 1700. Further, as also discussed below, such information can be provided to, and updated by, the mapping system 611 in real time.

Referencing FIG. 14B, according to certain embodiments, in addition to, or in lieu of the mapping system 611 of the control system 602 and/or controller 604, a central control system 1450 can be utilized to generate, update, and/or store one or more obstacle maps 1700. For example, according to certain embodiments, the central control system 1450 can include a mapping system 1452 that can utilize information that is, or would be, used on a mapping system 611 of the control system 602 to generate an obstacle map 1700. Additionally, or optionally, the obstacle map(s) 1700, and/or information utilized to generate such maps 1700, can be stored in the memory 606 of the controller 604, a memory or database 1460 of the central control system 1450, and/or at an external database 1460, such as, for example, a cloud based database.

The control system 602 can be adapted to communicate a generated obstacle map(s) 1700 and/or information used to generate the obstacle map(s) 1700 to the central control system 1450 and/or external database 1460, and vice versa. Further, while information used to generate the obstacle map may be obtained by operation of a first work machine 100a (Fig. 14B), control system, 602 of that first vehicle 100a, the central control system 1450, and/or the external database 1460 can be adapted to communicate the generated obstacle map(s) 1700 and/or associated information to one or more other work vehicles 100b, including different types of work vehicles. Such communications between the control system 602 of work vehicles 100, the central control system 1450, and/or external database can occur in a variety of manners, including, for example, via a variety of different wired and/or wireless communication protocols. For example, according to the illustrated embodiment, the control system 602 of the first work machine 100a can include a transceiver 605 that can wirelessly communicate with a transceiver 1456 of the central control system 1450, the external database 1460, and/or the transceiver 605 of another work machine 100b. Thus, for example, changes relating to previously detected objects, including for example, changes relating to the subsequent removal or displacement of such objects, as well as the presence of new obstacles, that are detected via use of the obstacle detective systems 320, 520, 1420 of a first work machine 100a may be reflected in the obstacle map 1700 that is being, or will subsequently be, used by a second, different work machine 100b.

Referring now to FIG. 15, an illustrative method 1500 of operating the work machine 100 may be embodied as, or otherwise include, a set of instructions that are executable by the control system 602 (i.e., the obstacle detection and mapping module 714 of the controller 604). The method 1500 corresponds to, or is otherwise associated with, performance of the blocks described below in the illustrative sequence of FIG. 15. It should be appreciated, however, that the method 1500 may be performed in one or more sequences different from the illustrative sequence. Additionally, while FIG. 15 discusses evaluation of detected objects with respect to satisfying particular criteria or thresholds, such as, for example, with respect to blocks 1510, 1512, 1514, 1526, 1528, 1530, 1532, according to some embodiments, one or more, if not all, of these criteria and/or thresholds may not be evaluated, and/or different or additional criteria or thresholds can be used for evaluating detected objects. Further, the features of FIG. 15 can, according to certain embodiments, be supplemented by the ability of the operator to manually input, such as, for example, via the user interface 642, information regarding objects detected by the operator that can be included in the obstacle map 1700.

At block 1502 of illustrative method 1500, a detection system, such as, for example one or more of the obstacle detection systems 320, 520, 1402, 1422 that detect the presence of an object that is at, on, or above the surface of the ground is activated. Moreover, according to the illustrated embodiment, one or more of a surface obstacle detection system of the first detection system 1422, the partially grounded obstacle detection system of the second detection system 1424, and the completely grounded obstacle detection system of the third detection system 1426 can be activated at block 1502. As discussed below, according to certain embodiments, the detection system(s) 1422, 1424, 1426 activated at block 1502 can be a detection system(s) 1422, 1424, 1426 that is/are different than the detection system(s) 1422, 1424, 1426 activated at block 1540. Thus, for at least purposes of illustration, the activation of a detection system at block 1502 is discussed below with respect to activation of one, or both, of the first and second detection systems 1422, 1424, and the activated detection system at block 1526 is discussed with respect to activation of one or both of the second and third detection systems 1424, 1426. Moreover, activation at block 1502 is discussed herein with reference to detection systems 1422, 1424 capable of detecting obstacles that are completely or partially above the surface of the ground, and activation at block 1526 is discussed with reference to detection systems 1424, 1426 capable of detecting obstacles that are partially and/or completely located beneath the surface of the ground. Thus, various combinations of the first, second, and third detection systems 1422, 1424, 1426 can be associated with the activations at blocks 1502, 1526, as well as various combinations of the specific type of detection systems (e.g. systems 610, 616, 624, 630) that are activated at blocks 1502 or 1526.

Accordingly, in the exemplary illustrated embodiment, the specific type(s) of obstacle detection system activated at block 1502 can include a first detection system 1422 having one or more of the camera detection system 610, ultrasonic detection system 630, and/or a pressure detection system that utilizes the one or more pressure sensors 305. Additionally, or alternatively, activation at block 1502 can utilize detection systems that can be associated with the second detection system 1424, such as, for example, the radar detection system 616, lidar detection system 624 and/or ultrasonic detection system 630. Activation at block 1502 can also include activation of corresponding components or units of the receiver unit 646, as well as the location system 644, including, for example, the GPS 530.

At block 1504, the activated first and/or second detection system 1422, 1424 can, according to certain embodiments, emit a signal, such as, for example, emit a signal from one or more signal generator(s) 632 of the ultrasonic detection system 630, the laser 626 of the lidar detection system 624, and/or the transmitter 618 of the radar detection system 616. At step 1506, the receiver unit 642, such as, for example, the radio wave receiver 650, ultrasonic wave receiver 652, and/or laser receiver 654 can detect the return signal and/or echo, which can also be recorded.

While the foregoing discussion of an exemplary embodiment is discussed and illustrated in terms of features relating to the emitting and collection/recording of return signals and sound waves, according to other embodiments, other, different steps can be taken to collect information that may be indicative of the presence of an obstacle. For example, according to embodiments in which the first detection system 1422 activated at block 1502 is a camera detection system 610, rather than emitting and collecting soundwaves at blocks 1504, 1506, a camera 612 or vision system can instead be configured to capture and/or store images of an area to locate and identify obstacles, as previously discussed. Additionally, according to other embodiments, rather than emitting and collecting signals at blocks 1504, 1506, pressure readings obtained by one or more pressure sensors 305, including pressure sensors 305 mounted to the implement 102, can be used to provide signals corresponding pressure measurements and/or readings that can be evaluated by the first detection system 1422 and/or controller 604 in determining whether an obstacle has been encountered at a particular location.

At block 1508, the information collected, sensed, and/or captured from the operation of the detection system 1422, 1424 can be evaluated to determine whether an obstacle(s) is/are present at a particular location(s). For example, as previously mentioned, such detection can involve converting sound waves collected or recorded by, for example, the receiver unit 646, among other collected information, into measurable electrical signals, and evaluating those measurable for an indication of the presence of an object, as well as a relative location of such an object. Such measureable signals can also be utilized to determine a size of the detected object(s). Similarly, the controller 604 can evaluate an image(s) obtained from the operation of the camera detection system 610 and/or sensor input from one or more sensors 305 for detection of the presence of an object in the image(s), as well as a determine of a size of such a detected object.

Information from the location system 644, such as, for example, GPS information, can also be used in connection with the relative location information collected and/or recorded at block 1506 to further identify a location of the detected object. Moreover, the position of the work machine 100, implement 104, and/or the detection system 1422, 1424 as attained, for example, via GPS 530, at the time when the relative position of the detected object was known can be used to determine the actual position of the detected object. Such a determination can include, for example, determining coordinates, such as, for example, at least GPS coordinates and/or coordinates relative to at least three axes, for the detected object.

At block 1510, according to certain embodiments, the control system 602, such as, for example, the controller 604, can utilize information obtained via use of the activated detection system 1422, 1424, receiver unit 646, and/or the location system 644 to determine if the detected object(s) is, or is not, in, or within, a reference location. Examples of reference locations include, for example, an area(s) that the work machine 100 and/or implement 102 is, or will be, traveling, property or field lines, or other areas or boundaries that may relate to the operation of the work machine 100 and/or implement 102, among other reference locations. According to certain embodiments, the reference location can be established during an operation of the work vehicle 100 and/or implement 102, and thereafter retained for other, future uses. Alternatively, or additionally, the reference location can be preset or predetermined, such as, for example, boundary coordinates. Evaluating whether a detected object is, or is not, present or within the reference location can include, for example, comparison of the location of the detected object to the reference area or location.

If the object is determined to be outside the reference location, then at block 1516, optionally, information regarding the detected object can be stored, such as, for example, in the memory 606, the database 1454 of the central control system 1450, and/or in the external database 1460. Storage of such information can provide an indication in the future of the manner to handle similar information if obtained during a subsequent operation of the activated detection system 1422, 1424, such as, for example, an indication to ignore and/or to not map the associated detected information. Moreover, the determination at block 1510 that the detected object is outside of the reference location can result in the object not being depicted in the obstacle map 1700.

If the detected object is determined at block 1510 to be within the reference location, then at block 1512, a determination can be made as to whether the detected object satisfies a size threshold. The size threshold can be based on a variety of types of criteria, including, for example, the size of the detected object relative to the implement 102 that may come into contact with the object, and/or the potential harm and/or damage such contact could inflict on the implement 102. As the criteria at block 1512 can be different for different types of implements 102, other criteria that may, in at least some instances, be applicable, can include the impact the object may have on seed that may be deposited in the area around the detected object, among other criteria. Moreover, the size threshold can relate to obstacle sizes that could prevent seed deposited by the implement 102 from contacting soil in manner that would facilitate germination of the deposited seed, and could thereby result in a potentially wasteful expenditure of seed. Accordingly, in at least some embodiments, the threshold size for block 1512 can at least be based in part on, and/or adjustable in view of, the type of implement 102 and/or type of operation being performed by the implement 102. Such information regarding the implement 102 being used and/or the operation to be performed can be automatically detected by the control system 602. Alternatively, such information can be manually inputted via an operator, such as, for example, via the user interface 642. Such automatic detection and/or manual input of information can facilitate a corresponding selection and/or adjustment by the control system 602 of the size threshold that is to be employed at step 1512.

In the event the detected objected is determined at step 1512 to not satisfy the size threshold, information regarding the detected object can be stored at block 1516. Storage of such information may provide an indication in the future of the manner for handling similar information if obtained during a subsequent operation of the first detection system 1422, such as, for example, an indication to ignore and/or not map the associated detected information. Moreover, the determination at block 1512 that the detected object does not satisfy the size threshold can result in the object not being depicted in the obstacle map 1700.

According to certain embodiments, if the detected object is determined at block 1512 to satisfy the size threshold, then, depending on the specific type of detection system 610, 616, 624, 630 employed, a determination can be made at block 1514 as to whether the detected object satisfies a rigidity threshold. If the particular type of detection system(s) 610, 616, 624, 630 activated at block 1502 do not provide information that can indicate, or can be used to determine, rigidity or relative rigidity, then block 1514 can be skipped. If however the detection system employed is capable of providing information that is indicative of rigidity, such as a relative rigidity, then an evaluation of information regarding the rigidity of the detected object with respect to a threshold rigidity value can assist in determining whether contact of the detected object by the implement 102 may, or may not, be anticipated to cause damage to the implement 102. Moreover, such a rigidity determination can assist in determining whether the detected object is, with respect to the implement 102, a potentially harmful rock, stone, or a metallic object, or otherwise a less harmful collection of compacted soil or clay, among other materials.

As previously mentioned, activation of a detection system(s) 1422, 1424 at block 1502 can generally coincide with the activation of another detection system 1424, 1426, such as, for example, a ground penetrating system, at block 1526. Thus, for example, activation of the first detection system 1422 shown FIG. 14A at block 1502 can also be accompanied by activation of the second and/or third detection systems 1424, 1426 at block 1518. Similarly, as another example, activation of one or both of the first detection system 1422 and second detection system 1424 at block 1502 can also be accompanied by activation of the third detection system 1426 at block 1518.

Similar to blocks 1504 and 1506, at block 1520 the third detection system 1426 can emit a signal(s), such as, for example, from emit signals from the transmitter 618 of a radar detection system 616 that is the form of a GPR system. The associated echoes or return signals can then be detected and/or recorded by the radio wave receiver 650 at block 1522.

At block 1524, the information collected and/or captured from block 1522 can be evaluated to determine whether an obstacle(s) is/are present at a particular location(s). For example, as previously mentioned, such detection can involve converting sound waves collected or recorded by, for example, the receiver unit 646, among other collected information, into measurable electrical signals, and evaluating those measurable for an indication of the presence of an object. Additionally, similar to block 1508, such measureables can also be used to indicate a relative location of the detected object. Such measureables can be used with a corresponding known position of the work machine 100, implement 104, and/or the detection system 1422, 1424 to determine the actual position of the detected object, such, for example, in terms of the GPS coordinates for the detected object and/or a location along a multi-coordinate axis, such as, for example, a three coordinate axis.

Similar to block 1510, at block 1526 a determination can be made as to whether the object detected by use of the detection system(s) 1424, 1426 that was activated at block 1518 is within a reference location. The reference location used, and/or determination made, at block 1526 can be similar to the manner in which the reference location and/or determination was made at block 1510. Additionally, as in the illustrated embodiment, one or more of the detection systems 1424, 1426 activated at block 1518 can be utilized to detect information regarding objects that are at least partially, if not completely, located or buried beneath the surface of the ground. Thus, at step 1528, the controller 604, including, for example, the processor 608, can determine whether an object located in the reference location also extends to, or is otherwise located within, a certain, or predetermined, depth in the ground. Such a depth threshold can be based on a variety of different criteria. For example, the depth threshold can be based on the depth the particular type of implement 102 being used is expected to downwardly extend into the ground, the depth that the detected object can be expected to be displaced by contact with the implement 102 in a manner that can be anticipated to not damage the implement 102, and/or the depth at which the detected object may interfere with plant growth, among other considerations. Further, while FIG. 15 depicts the reference location and depth threshold inquires separately at blocks 1526, 1528, according to other embodiments, the depth threshold inquiry can be part of the reference location inquiry at block 1526.

At blocks 1530 and 1532, the size and rigidity of the detected object can be evaluated, respectively, in a manner similar to the size and rigidity evaluations discussed above with respect to block 1512 and block 1514. If the determinations at blocks 1526, 1528, 1530, and/or 1532 are the detected object does not satisfy the associated requirement or threshold, then at block 1534 information regarding the detected object can be stored for future use. For example, similar to block 1516, at block 1534 according to certain embodiments, information regarding the detected object can be stored for future use, including providing an indication that the detected object is not to be displayed on the obstacle map 1700.

Similar to blocks 1510, 1512, 1514, the requirements and/or thresholds for blocks 1526, 1528, 1530, 1532 may change for different types of implements 102 and/or different types of operations, such as, for example, agricultural operations involving the work vehicle 100. Thus, while blocks 1516 and 1534 may record information regarding detected objects that are not, or will not, be displayed on a particular obstacle map 1700, such information may satisfy the thresholds and/or requirements for other implements 102 and/or operations. Accordingly, while information regarding detected objects may, in applications or operations, be stored at blocks 1516, 1532 and not shown in a corresponding obstacle map 1700, such information may in other instances be utilize to display the detected object in obstacle maps 1700 for other applications or operations. For example, information regarding detected objects provided by the obstacle map 1700, as well as information stored at blocks 1516, 1532, can later be used by a stone picker machine, or other implement, that may later selectively remove and/or displace those detected objects from their detected locations.

According to embodiments in which the control system 602 and/or central control system 1450 includes a mapping system 611, 1452 information regarding the detected object(s) can be, if not previously, communicated to the mapping system 611, 1452 at block 1536. Further, as previously discussed, the mapping system 611, 1452, or other portions of the controller 604 or central control system 1450 used for mapping, can utilize the communicated information to assign visually distinctive indicators or descriptors to the detected objects for display on the obstacle map 1700. Such visual indicators or descriptors can provide a variety of different types of information regarding each detected object.

For example, according to certain embodiments, visual indicators, such as, for example, colors and/or hatch or fill patterns, can be utilized to indicate whether an object 1701 is above, partially beneath, and/or completely buried beneath the surface of the ground. For example, referencing FIG. 17, a first color, such as for example red, and/or a first hatch of fill pattern 1702, can be utilized to indicate detected objects 1701 are located above ground. Similarly, second and third colors, such as, for example, blue and yellow, and/or a second and third hatch or fill patterns 1704, 1706, respectively, can be utilized to indicate detected objects 1701 that are at least partially located beneath the ground, and objects 1701 that are entirely beneath the surface of the ground. Additionally, different line patterns 1708, 1710 around an outer perimeter of the displayed objects 1701 can provide an indication of different levels or degrees of relative rigidity of the detected object 1701. For example, a solid outer perimeter line 1710 that may or may not have a heavier line weight can provide an indication that the displayed object 1701 has a higher degree of rigidity, or relative rigidity, then a displayed object 1701 that is shown with an outer perimeter line 1708 illustrated in broken line format and/or has a lighter line weight. Additionally, while FIG. 17 shows the detected objects 1701 as having generally round or oval shapes, the mapping system 611 can be configured to display a representation of the actual shape of the detected object 1701, and/or provide an indication of the size, or a relative size, of the detected object 1701.

The method 1500 discussed above addresses use of multiple detection systems 1422, 1424, 1426. Accordingly, in some instances an object may be detected by more than one detection system 1422, 1424, 1426. For example, the first detection system 1422 may detect the presence of a portion of an object that is located above, or on, the surface of the ground, while the second detection system 1424 can detect the presence of the same object, but include not only information regarding the portion of the object that is above, or on, the surface of the ground, but also information regarding a portion of the same object that is located below the surface of the ground. Similarly, the third detection system 1426 can provide information regarding a portion of an object located below the surface of the ground, while the second detection system can also provide regarding the portion of the same object that is located below the surface of the ground, as well as additional information regarding the portion of that same object that is on, or above, the surface of the ground. In such instances, the controller 604 and/or processor 606 may be configured to evaluate the information from the different detection systems 1422, 1424, 1426 for any discrepancies, and/or for supplemental information to include in the obstacle map 1700 regarding the detected object. Additionally, or alternatively, in the event there is discrepancies or a conflict in the information provided by the different detection systems 1422, 1424, 1426 regarding the same object, the controller 604 and/or processor 606 can be configured to default to using information from a particular detection systems 1422, 1424, 1426. Such a default can be based on a variety of criteria, including an expected accuracy of the information from the detection systems 1422, 1424, 1426, and whether the object is located both above and below the surface of the ground.

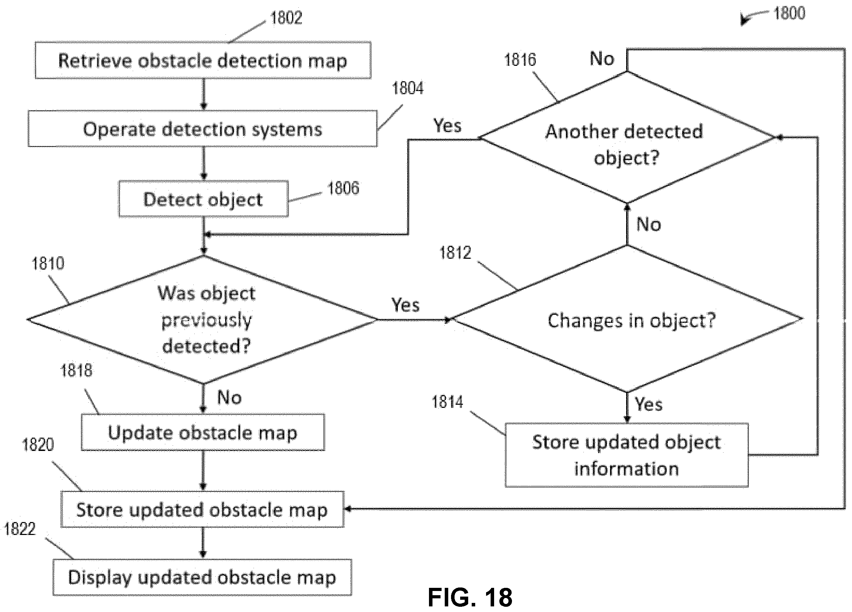

FIG. 18 is a simplified flowchart of a method 1800 for updating the obstacle map 1700 that may be performed by the obstacle detection and mapping module 714 of the controller that is diagrammatically depicted in FIG. 7. The method 1800 corresponds to, or is otherwise associated with, performance of the blocks described below in the illustrative sequence of FIG. 18. It should be appreciated, however, that the method 1800 may be performed in one or more sequences different from the illustrative sequence.

At block 1802, a previously generated obstacle map 1700 can be retrieved, such as, for example, from the memory 606 of the controller 1604, the database 1454 of the central control system 1450, and/or the external database 1460. At block 1804, one or more of the obstacle detection systems 1422, 1424, 1426 can be operated in connection with detecting objects at least present in a travel path of, and/or an area around, the work machine 100 and/or implement 102.

Upon detection of an object 1806 by use of a detection system 1422, 1424, 1426, the controller 604 and/or the central control system 1450 can determine at block 1810 whether the detected object had previously been detected. According to certain environments, the determination at block 1810 can include evaluating whether the object is depicted on the obstacle 0map 1710 and/or if information regarding the object was previously stored, such as, for example, stored in connection with blocks 1516 or block 1534 in method 1500. If the detected object had previously been detected, then at block 1812 a determination can be made as to whether there have been any changes relating to the object, including, for example, changes in the location of the object and or size. If there have been changes to the object, those changes can be record at block 1814, and the obstacle map 1700 can be updated to reflect those changes. Otherwise, if no changes are detected at block 1812, then at block 1816 a determination can be made as to whether other objects have been detected that are to be evaluated.

If a determination is made at block 1810 that a new object has been detected, then a process such as that discussed with reference to method 1500 can be performed to determine whether the object satisfies certain criteria to be displayed on the obstacle map 1700. Again, such criteria can include, for example, whether the detected object is within a reference location, and whether the object satisfies a size, rigidity, and/or depth threshold for inclusion on the obstacle map 1700. If the object is to be included in the map 1700, information regarding the object can be recorded, and the object can be assigned visual indicators, as discussed, for example, in block 1538. In the event the detected obstacle 1700 is determined not to satisfy criteria for inclusion on the map 1700, then similar to block 1516 and block 1534 of method 1500, the information regarding the detected object can be stored for potential future use.

At block 1818, the obstacle map 1700 can be updated to include, as well as display, the newly detected object(s). The updated map 1700 can also be stored in a memory or database 606. 1454, 1460 at block 1820 for future use, and, moreover, for later display on the display 640 of the work machine 100 at block 1822.

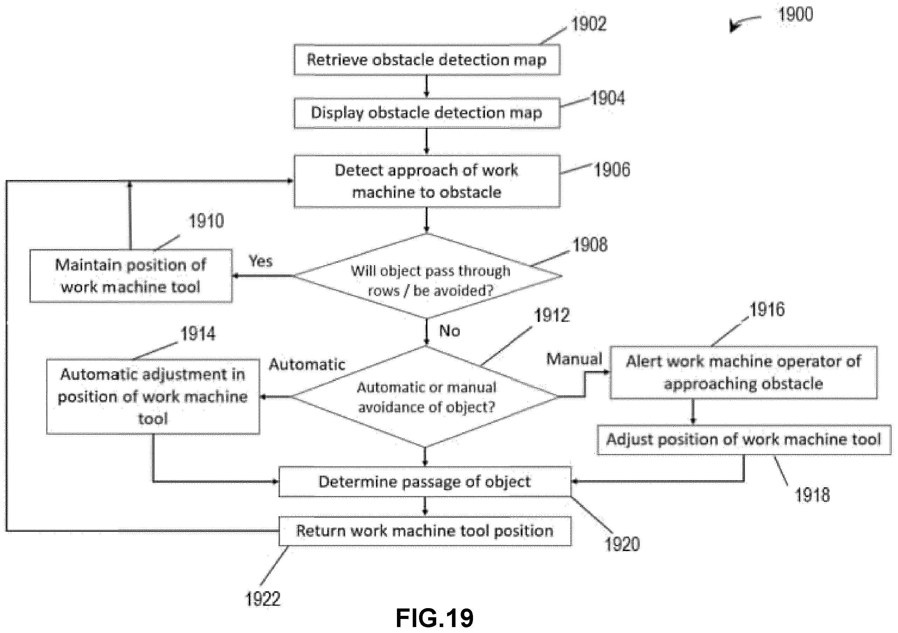

FIG. 19 is a simplified flowchart of a method 1900 for using information from the obstacle map 1700 to adjust operations of the work machine 100 and/or to provide operator notifications that may be performed by using the obstacle detection and mapping module 714 of the controller that is diagrammatically depicted in FIG. 7. The method 1900 corresponds to, or is otherwise associated with, performance of the blocks described below in the illustrative sequence of FIG. 19. It should be appreciated, however, that the method 1900 may be performed in one or more sequences different from the illustrative sequence.

At block 1902, an existing obstacle map 1700, if any, can be retrieved and displayed at block 1904. Alternatively, the obstacle map 1700 can be generated during operation of the work machine 104 and/or of the implement 102. At block 1906, a determination can be made as to whether the work machine 100 and/or implement 102 is approaching an obstacle that is displayed on the obstacle map 1700 and/or is currently being detected by operation of a detection system(s) 1422, 1424, 1426. Detecting that the work machine 100 and/or implement 102 is approaching a detected object can be based on a variety of different criteria, including, for example, whether the work machine 100 and/or implement 102 is within a certain predetermined distance or radius from the detected object.

At block 1908, a determination can be made, such as, for example, by the controller 604, as to whether the detected object has characteristics, such as, for example, a position and/or size, that may result in the object either passing or contacting a component of the work machine 100 and/or agricultural implement 102, such as, for example, whether a shank assembly 132 will contact the object. Such an analysis can include evaluating the current and/or anticipated position of the work machine 100, implement 102, and/or component(s) of the implement 102 relative to the location of the detected object.

If a determination is made at block 1908 that the work machine 100 and/or agricultural implement 102 will not contact the object, and/or that any contact will not damage the implement 102 or harm the object, then at block 1910 a determination can be made at continue the operation and/or current travel path of the work machine 100 and/or implement 102 without adjustment. If however at block 1908 a determination is made that the work machine 100 and/or implement 102 will contact the object, and/or the implement 102 will contact the detected object in a manner that may damage the implement 102 and/or harm the object, then at block 1918 a determination can be made as to whether the implement 102 is being operated in an automatic or manual adjustment mode.

If operating in an automatic adjustment mode, then at block 1910 the controller 604 can communicate instructions to the tool position and adjustment mechanism 636 to adjust a position of one or more components of the implement 102. For example, the controller 604 can provide instructions to the tool position and adjustment mechanism 636 that can result in the lifting of a shank assembly 132 to a height at which the assembly 132 will avoid contact with the detected object. Alternatively, if operating in a manual adjustment mode, then at block 1916, an alert system can provide an alert or warning to an operator in the cab 410 of a potential upcoming contact of the work machine 100 and/or implement 102 with the detected object.

Such an alert to the operator can be communicated in a variety of different manners, including, for example, via a visual and/or audible alert or alarm. Additionally, or alternatively, the alert can be communicated via a change in the operation of the work machine 100, such as, for example, via a change in the speed at which the work machine 100 is traveling, a stoppage in the movement of the work machine 100, and/or a haptic feedback, such as, for example a shaking in a steering wheel, joystick, and/or operator seat.

The type of warning provided by the alert system at block 1916 can be predetermined, or preset by the operator. For example, according to certain embodiments, the operator can opt to enable, or deactivate, one or more audible and/or visual alerts being used to notify the operator of an upcoming object. For example, the operator can select to have an audible alert or sound emit from the speak 641 and/or horn of the work machine 100, and/or be provided with a visual alert, such as, for example, an illumination or message on the display 640 and/or window shade, as well as illumination of lights 643 on the dashboard 638, among other types of alerts. Further, the intensity of such an alert(s), such as, for example, a loudness and/or brightness, among other settings, can be preset by the operator.

At block 1918, in response to such an alert or warning, the operator can make a manual adjustment to the implement 102, including, for example, by lifting one or more of the shank assemblies 132. The type of adjustment made at block 1914 or block 1918 can depend on different factors, including, the size and/or rigidity of the object and the type of implement 102 being utilized. Additionally, the timing of the adjustments made at block 1914 or 1918 can be based on a variety of different criteria, including occurring when the implement 102 reaches, or is at a threshold distance from, the detected object and/or based on an anticipated time at which the implement 102 will reach the object. At block 1920, a determination can be made that the implement 102 has past the detected object, which can be based, for example, on the actual positions of the implement 102 and the detected object, and/or time based. Following a determination that the object has been past, at block 1922 the implement 1904 can be returned to its prior, or normal, operating position.

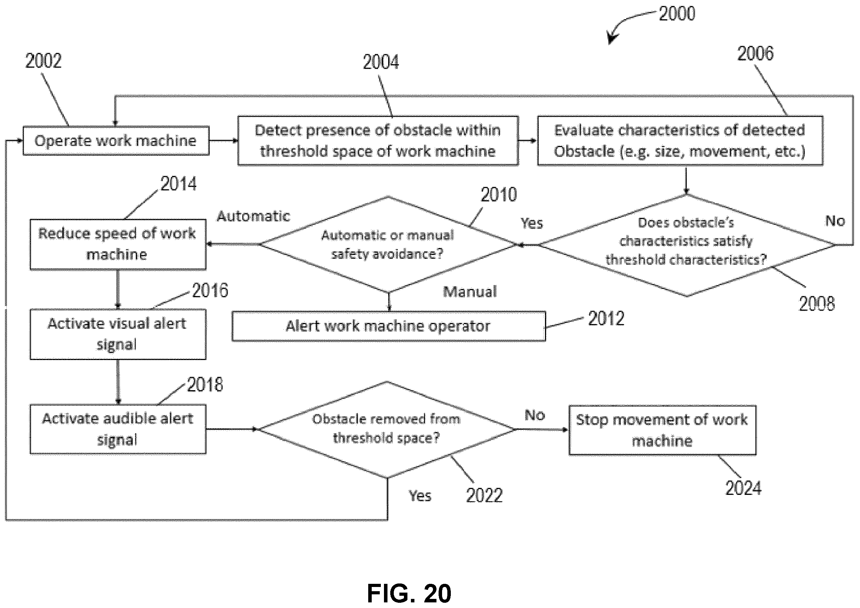

FIG. 20 is a simplified flowchart of a method 2000 for the work vehicle 100 and/or the agricultural implement 102 to avoid a detected object. The method 2000 corresponds to, or is otherwise associated with, performance of the blocks described below in the illustrative sequence of FIG. 20. It should be appreciated, however, that the method 2000 may be performed in one or more sequences different from the illustrative sequence.

As seen in FIG. 20, a work machine 100 being operated at block 2002 can detect at block 2004 the presence of an obstacle that is within a threshold distance, space, or area of the work machine 100 and/or implement 102. The obstacle detected at block 2004 may be, in addition to an object detected in or on the ground, an object that is at least temporary position above ground and/or is moving, such as for example a tree, person, and/or an animal. Thus, at block 2006, characteristics of the detected object may be evaluated, including, for example, whether the object is moving, a size of the object, and/or a height above the surface to which the object extends.

At block 2008, a determination can be made as to whether the evaluated characteristics satisfy certain predetermined criteria, including, for example, criteria that may indicate that the detected object is a person or animal. If the characteristics evaluated at block 2008 do not to satisfy the predetermined criteria, then the work machine 100 can continue with its operation. However, if the criteria that is evaluated at block 2008 is satisfied, then at block 2010 a determination can be made as to whether the work machine 100 is operating in an automatic or manual safety avoidance mode.

If operating in a manual safety avoidance mode, then at block 2012 the controller 604 can issue signals intended to alert or warn the operator of the presence of the detected obstacle. The type of alert, and associated options, at block 2021 can be the same, or similar to, those discussed above with respect to block 1916 of FIG. 20. For example, an audible warning alert may be played through the speaker 641 or horn of the work machine, and/or warnings or messages may be communicated or displayed via the display 640, window shade, and/or lights 643 on the dashboard 638. Such alerts or warnings can also take other forms, such as, for example, be communicated via a change in the speed or operation of the work machine 100 and/or via haptic feedback, among other manner of alerting the operator that action may need to be taken to avoid contacting the detected object.

Alternatively, if operating in an automatic safety avoidance mode, the controller 604 can issue signals to adjust or stop the operation of the work vehicle 100 and/or implement 102. For example, at block 2014 the controller 604 can issue a signal that facilitates a reduction in the speed at which the work machine 100 and or implement 102 is traveling or operating. Additionally, according to certain embodiments, including embodiments in which the work machine 100 is self-driven, the processor 604 can issue commands to alter the path or course of travel of the work machine 100 and/or implement 102 so as to at least attempt to avoid contacting the detected obstacle. Further, similar to block 2012, at block 2016 and block 2018, the controller 604 can issue commands to provide audible alerts via the speak 641 and/or or visual warnings, respectively, to the operator of the work machine 100 of the presence and/or potential contact with the detected obstacle. In a further attempt to avoid collision with the detected obstacle, if a determination is made at block 2022 that the detected obstacle is within a threshold distance of space from the work machine 100 and/or implement 102, then at block 2024, the controller 604 can issue a command that facilitates a stoppage in the movement and/or operation of the work machine 100 and/or implement 102. Otherwise, in the automatic avoidance safety mode, if the detected obstacle has been moved from a threshold space, and/or contact with the obstacle is no longer deemed imminent or likely, then the work machine 100 can continue in a normal operating mode.

FIG. 21 is a simplified flowchart of a method 2100 for alerting an operator of the work vehicle 100 of a detected object that may be performed by the spotlight indicator module 716 of the controller that is diagrammatically depicted in FIG. 7. The method 2100 corresponds to, or is otherwise associated with, performance of the blocks described below in the illustrative sequence of FIG. 21. It should be appreciated, however, that the method 2100 may be performed in one or more sequences different from the illustrative sequence.

As the work machine 100 and/or implement 102 is moving, as indicated by block 2102, a detection system 1422, 1424, 1426 can at block 2104 be continuously monitoring the path of travel and/or area around the work machine 100 and/or implement 102. Such monitoring can, for example, be similar to the process discussed above with respect to method 1500. If an object is determined to be detected at block 2016, then at block 2018 a spotlight system 510 (FIGS. 6 and 14A) can calculate a distance from the object with respect to a current position of the work machine 100 and or implement 102. Using the calculate distance of the object and the position of the work machine 100 and/or implement 102, the spotlight system 510 can calculate coordinates for the detected object. For example, according to certain embodiments, the spotlight system 510 can determine a location of the detected object using a three-dimensional coordinate system (X, Y, Z). Thus, for example, the coordinates can provide an indication of the position of the detected object relative to being in front of, or to the side of, the vehicle, as well as positions in between. Additionally, the third axis of the coordinate system can provide an indication of a vertical height and/or vertical location of the detected object.

At block 2112, the spotlight system 510 can communicate the calculated coordinates to the controller 604 or another component of the spotlight system 510 that can control the positioning of the light unit 512 of the spotlight system 510. At block 2114, the spotlight system 510 and/or controller 604 can determine a position and/or orientation for the light unit 512 such that a light, laser, or other illumination that is, or will be, emitted from the light unit 512 will be emitted in a direction towards the detected object. For example, according to certain embodiments, the controller 604 and/or spotlight system 510 may determine a current position and/or orientation of the light unit 512 via one or more position sensors 511, as previously discussed. Information regarding the current position/orientation of the light unit 512, the position of the work vehicle 100 and/or implement 102, and the coordinates of the detected object can be utilized by the controller 604 and/or spotlight system 510 to determine the extent and/or direction that the position/orientation of the light unit 512 is to be adjusted so that light emitted from the light unit 512 is directed toward the calculated coordinates and/or the detected object.

Upon determining changes for the positioning/orientation of the light unit 512, the controller 604 and/or spotlight system 510 can provide signals for position and orientation actuators 514 of the spotlight system 510 so that the light unit 512 is displaced, such as, for example, rotated, to an positon/orientation at which light emitted from the light unit 512 is directed towards the detected object. As previously discussed, such actuators 514 can, for example, be operated to change the orientation and/or positioning of the light unit 512 along two or more axes 516a, 516b. Thus, signals sent from the controller 604 and/or spotlight system 510 can control the direction and extent that the actuators 514 are to adjust, if needed, the position/orientation of the light unit 512. Additionally, at block 2114, the controller 604 and/or spotlight system 510 can issue signals that turn the light unit 512 on so that light 1607 is emitted from the light unit 512 to illuminate the detected object 1605, as illustrated in FIG. 16.

According to certain embodiments, at block 2114, the spotlight system 510 and/or controller 604 can also determine the light type and/or light color that is to be emitted from the light unit 512. For example, according to certain embodiments, the light unit 512 can emit more than one light color, such as, for example, emit a red colored light or white colored light. According to certain embodiments the light unit can include a plurality of lights, one or more of the lights having a different color, and/or the light unit can selectively adjust between use of different color lenses for the emitting of the light in various colors. Further, at certain times of day, and/or when ambient conditions are at certain brightness levels, one light color may be more effective in illuminating the detected object. For example, during daytime, a red colored light emitted from the light unit 512 may be more readily detectable by the operator of the work machine 100 than a light having a white color. Conversely, in the evening or at nighttime, a white colored light emitted from the light unit 512 may be more readily detectable by the operator of the work machine 100 than a light having a red color.

Additionally, at block 2114, the controller 604 and/or spotlight system 510 can continuously monitor the position of the work vehicle 100 and/or implement 102 relative to the calculated coordinates for the detected object, and make corresponding adjustments in the position/orientation of the light unit 512 such that the light unit 512 continuously emits, for at least a predetermined or selected time, a light in the direction of the calculated coordinates and/or the detected object. Thus spotlight system 510 can be configured to continuously focus light toward the calculated coordinate and/or detected object while the work vehicle 100 and/or implement 102 is moving, as well as in the event that the work vehicle 100 and/or implement 102 at least temporarily stops. Such illumination of the detected object and/or in the direction of the calculated coordinates can continue until a predetermined condition occurs, such as, for example, the vehicle travels to a certain positon or distance relative to, and/or past, the calculated coordinate and/or detected object.

## Claims

1. A work machine (100) comprising:
a control system (602, 602a) having an obstacle detection system (1420), a first detection system (1422) of the obstacle detection system (1420) configured to provide a first detection input, a second detection system (1424) of the obstacle detection system (1420) configured to provide a second detection input,
the control system (602, 602a) includes a memory (606) having instructions stored therein that are executable by a processor (608) to cause the processor (608) to receive the first detection input and the second detection input, and to selectively map, with the aid of a location system (644), an obstacle map (1700) identifying a location of each of the one or more first and second obstacles (1701),
**characterized in, that**
the first detection input is indicative of a presence of one or more first obstacles (1701) on a surface of a particular field,
the second detection input is indicative of a presence of one or more second obstacles (1701) that are at least partially below the surface of the particular field,
wherein the processor (608) is further configured to assign a first visual indicator (1702) to visually indicate on the obstacle map (1700) the presence of the one or more first obstacles (1701) on the surface of the particular field, and a second visual indicator (1704) to visually indicate on the obstacle map (1700) the one or more second obstacles (1701) are at least partially below the surface of the particular field, the first visual indicator (1702) being different than the second visual indicator (1704).

2. The work machine (100) of claim 1, wherein the memory (606) further includes instructions stored therein that are executable by a processor (608) to cause the processor (608) to determine, from the first and second detection inputs, a size of the one or more first and second obstacles (1701).

3. The work machine (100) of claim 1 or 2, wherein the memory (606) further includes instructions stored therein that are executable by a processor (608) to cause the processor (608) to determine, from the second detection input, a rigidity (1708, 1710) for each of the one or more second obstacles (1701), and wherein the processor (608) is further configured to indicate the rigidity of each of the one or more second obstacles (1701) on the obstacle map (1700).

4. The work machine (100) of one of the claims 1 to 3, wherein the first visual indicator (1702) and the second visual indicator (1704) each comprises at least one of a color, a fill pattern, a line format, and a line weight.

5. The work machine (100) of one of the claims 1 to 4, wherein the second detection input is indicative of a presence of one or more second obstacles (1701) that extend both above and below the surface of the particular field,
wherein the obstacle detection system (1420) further includes a third detection system (1426) configured to provide a third detection input indicative of a presence of one or more third obstacles (1701) positioned completely beneath the surface of the particular field, and
wherein the processor (608) is further configured to receive the third detection input, and to selectively map, with the aid of the location system (644), a location of each of the one or more third obstacles (1701) on the obstacle map (1700), the processor (608) further configured to assign a third visual indicator (1706) to visually indicate on the obstacle map (1700) the presence of the one or more third obstacles (1701) below the surface of the particular field, the third visual indicator (1706) being different than both the first visual indicator (1702) and the second visual indicator (1704).

6. The work machine (100) of one of the claims 1 to 5, wherein the work machine (100) includes an implement (102), the implement (102) including an adjustable component, and wherein the processor (608) is configured to identify, based on the location identified for the one or more first obstacles (1701) or for the one or more second obstacles (1701), a target object (1602. 1604, 1606), and to communicate a signal to adjust a vertical position of the adjustable component to avoid contact between the adjustable component and the target object (1602. 1604, 1606).

7. The work machine (100) of one of the claims 1 to 6, further including a spotlight system (510) communicatively coupled to the processor (608), the spotlight system (510) comprising a light unit (512) and one or more actuators (514), the light unit (512) being coupled to the work machine (100), the processor (608) configured to select a target object (1605) from the one or more first obstacles (1701) or the one or more second obstacles (1701), and to generate commands to the one or more actuators (514) to adjust a position of the light unit (512) about one or more axes (516a, 516b) to position the light unit (512) at an orientation that directs a light (1607) emitted from the light unit (512) toward the target object (1605).

8. The work machine (100) of one of the claims 1 to 9, wherein the processor (608) is configured to determine from either the first detection input or the second detection input, and with the aid of the location system (644), the location of the target object (1605) along at least a three axis coordinate system,
wherein the processor (608) is configured to generate updated commands for the one or more actuators (514) to adjust the position of the light unit (512) about the one or more axes (516a, 516b) as a position of the work machine (100) changes relative to the target object (1605), and
wherein the light unit (512) is configured to selectively emit the light (1607) in one of a first color and a second color, the first color being different than the second color.

9. A method (1500) of operating a work machine (100) according to one of the claims 1 to 8 including further, a frame structure coupled to a work implement (102) that has a plurality of ground engagement tools configured for interaction with an underlying surface in use of the work machine (100), the method further comprising:
receiving, by a controller (604) of the work machine (100), a first detection input provided by a first obstacle detection system (1420) that is indicative of a presence of a first obstacle (1701) positioned on a surface of a particular field;
receiving, by the controller (604), a second detection input provided by a second obstacle detection system (1420) that is indicative of a presence of a second obstacle (1701) that is partially positioned beneath, and partially positioned above, the surface of the particular field;
receiving, by the controller (604), a third detection input provided by a third obstacle detection system (1420) that is indicative of a presence of a third obstacle (1701) that is positioned entirely beneath the surface of the particular field;
identifying, by the controller (604), the presence of the first obstacle (1701) in the particular field based on the first detection input, the presence of the second obstacle (1701) in the particular field based on the second detection input, and the presence of the third obstacle (1701) in the particular field based on the third detection input;
selectively mapping, by the controller (604) and with the aid of a location system (644), a location of: the first obstacle (1701) based on the first detection input, the second obstacle (1701) based on the second detection input, and, the third obstacle (1701) based on the third detection input; and
assigning, by the controller (604), a first visual indicator (1702) to the first obstacle (1701), a second visual indicator (1704) to the second obstacle (1701), and a third visual indicator (1706) to the third obstacle (1701), the first, second, and third visual indicators (1702, 1704, 1706) providing a different visual indication of a positon relative to the surface of the particular field.

10. The method of claim 9, further comprising identifying, by the controller (604) and using the third detection input, a rigidity of the third obstacle (1701), and assigning a fourth visual indicator (1708, 1710) to the third obstacle (1701) that is indicative of a level of rigidity.

11. The method of claim 9 or 10, further comprising identifying a target object (1605) from the first and second obstacles (1701), calculating a coordinate for the target object (1605), the coordinate providing information regarding at least a lateral and vertical position of the target object (1605), adjusting a position of a light unit (512) relative to the coordinate for the target object (1605), and emitting a light (1607) from the light unit (512) toward the target object (1605).

## Patentansprüche

1. Arbeitsmaschine (100), umfassend:
ein Steuersystem (602, 602a) mit einem Hindernisdetektionssystem (1420), wobei ein erstes Detektionssystem (1422) des Hindernisdetektionssystems (1420) dazu ausgelegt ist, einen ersten Detektionseingang bereitzustellen, wobei ein zweites Detektionssystem (1424) des Hindernisdetektionssystems (1420) dazu ausgelegt ist, einen zweiten Detektionseingang bereitzustellen,
wobei das Steuersystem (602, 602a) einen Speicher (606) mit darin gespeicherten Anweisungen umfasst, die durch einen Prozessor (608) ausführbar sind, um den Prozessor (608) zu veranlassen, den ersten Detektionseingang und den zweiten Detektionseingang zu empfangen, und um mit Hilfe eines Ortungssystems (644) eine Hinderniskarte (1700) gezielt abzubilden, die einen Ort von jedem des einen oder der mehreren ersten und zweiten Hindernisse (1701) identifiziert, **dadurch gekennzeichnet, dass**
der erste Detektionseingang indikativ für ein Vorhandensein eines oder mehrerer erster Hindernisse (1701) auf einer Oberfläche eines bestimmten Feldes ist, der zweite Detektionseingang indikativ für ein Vorhandensein eines oder mehrerer zweiter Hindernisse (1701) ist, die sich mindestens teilweise unter der Oberfläche des bestimmten Feldes befinden,
wobei der Prozessor (608) ferner dazu ausgelegt ist, einen ersten visuellen Indikator (1702) zum visuellen Anzeigen auf der Hinderniskarte (1700) des Vorhandenseins des einen oder der mehreren ersten Hindernisse (1701) auf der Oberfläche des bestimmten Feldes und einen zweiten visuellen Indikator (1704) zum visuellen Anzeigen auf der Hinderniskarte (1700), dass sich das eine oder die mehreren zweiten Hindernisse (1701) mindestens teilweise unter der Oberfläche des bestimmten Feldes befinden, zuzuweisen, wobei sich der erste visuelle Indikator (1702) von dem zweiten visuellen Indikator (1704) unterscheidet.

2. Arbeitsmaschine (100) nach Anspruch 1, wobei der Speicher (606) ferner darin gespeicherte Anweisungen beinhaltet, die durch einen Prozessor (608) ausführbar sind, um den Prozessor (608) zu veranlassen, aus dem ersten und dem zweiten Detektionseingang eine Größe des einen oder der mehreren ersten und zweiten Hindernisse (1701) zu bestimmen.

3. Arbeitsmaschine (100) nach Anspruch 1 oder 2, wobei der Speicher (606) ferner darin gespeicherte Anweisungen beinhaltet, die durch einen Prozessor (608) ausführbar sind, um den Prozessor (608) zu veranlassen, aus dem zweiten Detektionseingang eine Steifigkeit (1708, 1710) für jedes des einen oder der mehreren zweiten Hindernisse (1701) zu bestimmen, und wobei der Prozessor (608) ferner dazu ausgelegt ist, die Steifigkeit jedes des einen oder der mehreren zweiten Hindernisse (1701) auf der Hinderniskarte (1700) anzugeben.

4. Arbeitsmaschine (100) nach einem der Ansprüche 1 bis 3, wobei der erste visuelle Indikator (1702) und der zweite visuelle Indikator (1704) jeweils eine Farbe und/oder ein Füllmuster und/oder ein Linienformat und/oder ein Liniengewicht umfassen.

5. Arbeitsmaschine (100) nach einem der Ansprüche 1 bis 4, wobei der zweite Detektionseingang indikativ für ein Vorhandensein eines oder mehrerer zweiter Hindernisse (1701) ist, die sich sowohl oberhalb als auch unterhalb der Oberfläche des bestimmten Feldes erstrecken,
wobei das Hindernisdetektionssystem (1420) ferner ein drittes Detektionssystem (1426) beinhaltet, das dazu ausgelegt ist, einen dritten Detektionseingang bereitzustellen, der indikativ für ein Vorhandensein eines oder mehrerer dritter Hindernisse (1701) ist, die vollständig unter der Oberfläche des bestimmten Feldes positioniert sind, und
wobei der Prozessor (608) ferner dazu ausgelegt ist, den dritten Detektionseingang zu empfangen und mit Hilfe des Ortungssystems (644) einen Ort jedes des einen oder der mehreren dritten Hindernisse (1701) auf der Hinderniskarte (1700) gezielt abzubilden, wobei der Prozessor (608) ferner dazu ausgelegt ist, einen dritten visuellen Indikator (1706) zum visuellen Anzeigen auf der Hinderniskarte (1700) des Vorhandenseins des einen oder der mehreren dritten Hindernisse (1701) unterhalb der Oberfläche des bestimmten Felds zuzuweisen, wobei sich der dritte visuelle Indikator (1706) sowohl von dem ersten visuellen Indikator (1702) als auch dem zweiten visuellen Indikator (1704) unterscheidet.

6. Arbeitsmaschine (100) nach einem der Ansprüche 1 bis 5, wobei die Arbeitsmaschine (100) ein Arbeitsgerät (102) beinhaltet, wobei das Arbeitsgerät (102) eine einstellbare Komponente beinhaltet, und wobei der Prozessor (608) dazu ausgelegt ist, basierend auf dem für das eine oder die mehreren ersten Hindernisse (1701) oder für das eine oder die mehreren zweiten Hindernisse (1701) identifizierten Ort ein Zielobjekt (1602, 1604, 1606) zu identifizieren und ein Signal zum Anpassen einer vertikalen Position der anpassbaren Komponente zu kommunizieren, um einen Kontakt zwischen der anpassbaren Komponente und dem Zielobjekt (1602, 1604, 1606) zu verhindern.

7. Arbeitsmaschine (100) nach einem der Ansprüche 1 bis 6, ferner umfassend ein Scheinwerfersystem (510), das kommunikativ mit dem Prozessor (608) gekoppelt ist, wobei das Scheinwerfersystem (510) eine Lichteinheit (512) und einen oder mehrere Aktuatoren (514) umfasst, wobei die Lichteinheit (512) mit der Arbeitsmaschine (100) gekoppelt ist, wobei der Prozessor (608) ausgelegt ist zum Auswählen eines Zielobjekts (1605) aus dem einen oder den mehreren ersten Hindernissen (1701) oder dem einen oder den mehreren zweiten Hindernissen (1701) und zum Erzeugen von Befehlen an den einen oder die mehreren Aktuatoren (514), um eine Position der Lichteinheit (512) um eine oder mehrere Achsen (516a, 516b) anzupassen, um die Lichteinheit (512) in einer Ausrichtung zu positionieren, die ein von der Lichteinheit (512) emittiertes Licht (1607) zu dem Zielobjekt (1605) lenkt.

8. Arbeitsmaschine (100) nach einem der Ansprüche 1 bis 9, wobei der Prozessor (608) dazu ausgelegt ist, entweder aus dem ersten Detektionseingang oder aus dem zweiten Detektionseingang und mit Hilfe des Ortungssystems (644) den Ort des Zielobjekts (1605) entlang mindestens eines dreiachsigen Koordinatensystems zu bestimmen,
wobei der Prozessor (608) ausgelegt ist zum Erzeugen aktualisierter Befehle für den einen oder die mehreren Aktuatoren (514), um die Position der Lichteinheit (512) um die eine oder die mehreren Achsen (516a, 516b) anzupassen, wenn sich eine Position der Arbeitsmaschine (100) relativ zu dem Zielobjekt (1605) ändert, und
wobei die Lichteinheit (512) dazu ausgelegt ist, das Licht (1607) gezielt in einer aus einer ersten Farbe und einer zweiten Farbe zu emittieren, wobei sich die erste Farbe von der zweiten Farbe unterscheidet.

9. Verfahren (1500) zum Betreiben einer Arbeitsmaschine (100) nach einem der Ansprüche 1 bis 8, das ferner eine Rahmenstruktur beinhaltet, die mit einem Arbeitsgerät (102) gekoppelt ist, das mehrere Bodeneingriffswerkzeuge aufweist, die zur Interaktion mit einer darunterliegenden Oberfläche bei Verwendung der Arbeitsmaschine (100) ausgelegt sind, wobei das Verfahren ferner Folgendes umfasst:
Empfangen, durch eine Steuerung (604) der Arbeitsmaschine (100), eines ersten Detektionseingangs, der durch ein erstes Hindernisdetektionssystem (1420) bereitgestellt wird, der indikativ für ein Vorhandensein eines ersten Hindernisses (1701) ist, das auf einer Oberfläche eines bestimmten Feldes positioniert ist;
Empfangen, durch die Steuerung (604), eines zweiten Detektionseingangs, der durch ein zweites Hindernisdetektionssystem (1420) bereitgestellt wird, der indikativ für ein Vorhandensein eines zweiten Hindernisses (1701) ist, das teilweise unter der Oberfläche des bestimmten Feldes positioniert ist und teilweise über dieser positioniert ist;
Empfangen, durch die Steuerung (604), eines dritten Detektionseingangs, der durch ein drittes Hindernisdetektionssystem (1420) bereitgestellt wird, der indikativ für ein Vorhandensein eines dritten Hindernisses (1701) ist, das vollständig unter der Oberfläche des bestimmten Feldes positioniert ist;
Identifizieren, durch die Steuerung (604), des Vorhandenseins des ersten Hindernisses (1701) in dem bestimmten Feld basierend auf dem ersten Detektionseingang, des Vorhandenseins des zweiten Hindernisses (1701) in dem bestimmten Feld basierend auf dem zweiten Detektionseingang und des Vorhandenseins des dritten Hindernisses (1701) in dem bestimmten Feld basierend auf dem dritten Detektionseingang;
gezieltes Abbilden, durch die Steuerung (604) und mit Hilfe eines Ortungssystems (644), eines Orts: des ersten Hindernisses (1701) basierend auf dem ersten Detektionseingang, des zweiten Hindernisses (1701) basierend auf dem zweiten Detektionseingang und des dritten Hindernisses (1701) basierend auf dem dritten Detektionseingang; und
Zuweisen, durch die Steuerung (604), eines ersten visuellen Indikators (1702) zu dem ersten Hindernis (1701), eines zweiten visuellen Indikators (1704) zu dem zweiten Hindernis (1701) und eines dritten visuellen Indikators (1706) zu dem dritten Hindernis (1701), wobei der erste, zweite und dritte visuelle Indikator (1702, 1704, 1706) eine unterschiedliche visuelle Anzeige einer Position relativ zu der Oberfläche des bestimmten Felds bereitstellen.

10. Verfahren nach Anspruch 9, ferner umfassend Identifizieren, durch die Steuerung (604) und Verwenden des dritten Detektionseingangs, einer Steifigkeit des dritten Hindernisses (1701) und Zuweisen eines vierten visuellen Indikators (1708, 1710) zu dem dritten Hindernis (1701), der indikativ für ein Steifigkeitsniveau ist.

11. Verfahren nach Anspruch 9 oder 10, ferner umfassend Identifizieren eines Zielobjekts (1605) aus den ersten und zweiten Hindernissen (1701), Berechnen einer Koordinate für das Zielobjekt (1605), wobei die Koordinate Informationen bezüglich mindestens einer lateralen und vertikalen Position des Zielobjekts (1605) bereitstellt, Anpassen einer Position einer Lichteinheit (512) relativ zu der Koordinate für das Zielobjekt (1605) und Emittieren eines Lichts (1607) von der Lichteinheit (512) in Richtung des Zielobjekts (1605).

## Revendications

1. Machine (100) de travail comprenant :
un système (602, 602a) de commande comportant un système (1420) de détection d'obstacle, un premier système (1422) de détection du système (1420) de détection d'obstacle configuré pour fournir une première entrée de détection, un deuxième système (1424) de détection du système (1420) de détection d'obstacle configuré pour fournir une deuxième entrée de détection,
le système (602, 602a) de commande comportant une mémoire (606) dans laquelle sont stockées des instructions qui sont exécutables par un processeur (608) pour amener le processeur (608) à recevoir la première entrée de détection et la deuxième entrée de détection, et pour cartographier sélectivement, à l'aide d'un système (644) de localisation, une carte (1700) d'obstacles identifiant un emplacement du ou de chacun des premiers et deuxièmes obstacles (1701),
**caractérisé en ce que**
la première entrée de détection est indicative de la présence d'un ou de plusieurs premiers obstacles (1701) sur une surface d'un champ particulier,
la deuxième entrée de détection est indicative de la présence d'un ou de plusieurs deuxièmes obstacles (1701) qui se trouvent au moins partiellement au-dessous de la surface du champ particulier,
le processeur (608) étant en outre configuré pour affecter un premier indicateur visuel (1702) pour indiquer visuellement sur la carte (1700) d'obstacles la présence du ou des premiers obstacles (1701) sur la surface du champ particulier, et un deuxième indicateur visuel (1704) pour indiquer visuellement sur la carte (1700) d'obstacles que le ou les deuxièmes obstacles (1701) se trouvent au moins partiellement en dessous de la surface du champ particulier, le premier indicateur visuel (1702) étant différent du deuxième indicateur visuel (1704).

2. Machine (100) de travail selon la revendication 1, la mémoire (606) comprenant en outre des instructions stockées dans celle-ci qui sont exécutables par un processeur (608) pour amener le processeur (608) à déterminer, à partir des première et deuxième entrées de détection, une taille du ou des premiers et deuxièmes obstacles (1701).

3. Machine (100) de travail selon la revendication 1 ou 2, la mémoire (606) comprenant en outre des instructions stockées dans celle-ci qui sont exécutables par un processeur (608) pour amener le processeur (608) à déterminer, à partir de la deuxième entrée de détection, une rigidité (1708, 1710) pour le ou chacun des deuxièmes obstacles (1701), et le processeur (608) étant en outre configuré pour indiquer la rigidité du ou de chacun des deuxièmes obstacles (1701) sur la carte (1700) d'obstacles.

4. Machine (100) de travail selon l'une des revendications 1 à 3, le premier indicateur visuel (1702) et le deuxième indicateur visuel (1704) comprenant chacun au moins un élément parmi une couleur, un motif de remplissage, un format de ligne et une épaisseur de ligne.

5. Machine (100) de travail selon l'une des revendications 1 à 4, la deuxième entrée de détection étant indicative de la présence d'un ou de plusieurs deuxièmes obstacles (1701) qui s'étendent à la fois au-dessus et au-dessous de la surface du champ particulier, le système (1420) de détection d'obstacle comportant en outre un troisième système (1426) de détection configuré pour fournir une troisième entrée de détection indicative de la présence d'un ou de plusieurs troisièmes obstacles (1701) positionnés complètement sous la surface du champ particulier, et
le processeur (608) étant en outre configuré pour recevoir la troisième entrée de détection, et pour cartographier sélectivement, à l'aide du système (644) de localisation, un emplacement de chacun des troisièmes obstacles (1701) sur la carte (1700) d'obstacles, le processeur (608) étant en outre configuré pour affecter un troisième indicateur visuel (1706) pour indiquer visuellement sur la carte (1700) d'obstacles la présence du ou des troisièmes obstacles (1701) au-dessous de la surface du champ particulier, le troisième indicateur visuel (1706) étant différent à la fois du premier indicateur visuel (1702) et du deuxième indicateur visuel (1704).

6. Machine (100) de travail selon l'une des revendications 1 à 5, la machine (100) de travail comprenant un outil (102), l'outil (102) comprenant un composant réglable, et le processeur (608) étant configuré pour identifier, sur la base de l'emplacement identifié pour le ou les premiers obstacles (1701) ou pour le ou les deuxièmes obstacles (1701), un objet cible (1602). 1604, 1606), et pour communiquer un signal pour régler une position verticale du composant réglable afin d'éviter un contact entre le composant réglable et l'objet cible (1602). 1604, 1606).

7. Machine (100) de travail selon l'une quelconque des revendications 1 à 6, comprenant en outre un système (510) de projecteur couplé de manière communicante au processeur (608), le système (510) de projecteur comprenant une unité (512) de luminaire et un ou plusieurs actionneurs (514), l'unité (512) de luminaire étant couplée à la machine (100) de travail, le processeur (608) étant configuré pour sélectionner un objet cible (1605) parmi le ou les premiers obstacles (1701) ou le ou les deuxièmes obstacles (1701), et pour générer des consignes destinées à l'actionneur ou aux actionneurs (514) pour régler une position de l'unité (512) de luminaire autour d'un ou plusieurs axes (516a, 516b) afin de positionner l'unité (512) de luminaire à une orientation qui dirige une lumière (1607) émise par l'unité (512) de luminaire vers l'objet cible (1605).

8. Machine (100) de travail selon l'une des revendications 1 à 9, le processeur (608) étant configuré pour déterminer, à partir soit de la première entrée de détection soit de la deuxième entrée de détection, et à l'aide du système (644) de localisation, l'emplacement de l'objet cible (1605) le long d'au moins un système de coordonnées à trois axes,
le processeur (608) étant configuré pour générer des consignes mises à jour pour l'actionneur ou les actionneurs (514) afin de régler la position de l'unité (512) de luminaire autour de l'axe ou des axes (516a, 516b) lorsqu'une position de la machine (100) de travail change par rapport à l'objet cible (1605), et
l'unité (512) de luminaire étant configurée pour émettre sélectivement la lumière (1607) soit dans une première couleur soit dans une deuxième couleur, la première couleur étant différente de la deuxième couleur.

9. Procédé (1500) d'exploitation d'une machine (100) de travail selon l'une des revendications 1 à 8, comprenant en outre une structure de châssis couplée à un outil (102) de travail qui comporte une pluralité d'outils d'interaction avec le sol configurés pour interagir avec une surface sous-jacente en cours d'utilisation de la machine (100) de travail, le procédé comprenant en outre :
la réception, par un moyen (604) de commande de l'engin (100) de travail, d'une première entrée de détection fournie par un premier système (1420) de détection d'obstacle indicative de la présence d'un premier obstacle (1701) positionné sur une surface d'un champ particulier ;
la réception, par le moyen (604) de commande, d'une deuxième entrée de détection fournie par un deuxième système (1420) de détection d'obstacle indicative de la présence d'un deuxième obstacle (1701) positionné partiellement sous, et positionné partiellement au-dessus, de la surface du champ particulier ;
la réception par le moyen (604) de commande d'une troisième entrée de détection fournie par un troisième système (1420) de détection d'obstacle indicative de la présence d'un troisième obstacle (1701) disposé entièrement sous la surface du champ particulier ;
l'identification, par le moyen (604) de commande, de la présence du premier obstacle (1701) dans le champ particulier sur la base de la première entrée de détection, de la présence du deuxième obstacle (1701) dans le champ particulier sur la base de la deuxième entrée de détection, et de la présence du troisième obstacle (1701) dans le champ particulier sur la base de la troisième entrée de détection ;
la cartographie sélective, par le moyen (604) de commande et à l'aide d'un système (644) de localisation, d'un emplacement : du premier obstacle (1701) sur la base de la première entrée de détection, du deuxième obstacle (1701) sur la base de la deuxième entrée de détection, et du troisième obstacle (1701) sur la base de la troisième entrée de détection ; et
l'affectation, par le moyen (604) de commande, d'un premier indicateur visuel (1702) au premier obstacle (1701), d'un deuxième indicateur visuel (1704) au deuxième obstacle (1701) et d'un troisième indicateur visuel (1706) au troisième obstacle (1701), les premier, deuxième et troisième indicateurs visuels (1702, 1704, 1706) fournissant une indication visuelle différente d'une position par rapport à la surface du champ particulier.

10. Procédé selon la revendication 9, comprenant en outre l'identification, par le moyen (604) de commande et à l'aide de la troisième entrée de détection, d'une rigidité du troisième obstacle (1701), et l'affectation d'un quatrième indicateur visuel (1708, 1710) au troisième obstacle (1701) qui est indicatif d'un niveau de rigidité.

11. Procédé selon la revendication 9 ou 10, comprenant en outre l'identification d'un objet cible (1605) à partir des premier et deuxième obstacles (1701), le calcul d'une coordonnée pour l'objet cible (1605), la coordonnée fournissant des informations concernant au moins une position latérale et verticale de l'objet cible (1605), le réglage d'une position d'une unité (512) de luminaire par rapport à la coordonnée pour l'objet cible (1605), et l'émission d'une lumière (1607) depuis l'unité (512) de luminaire vers l'objet cible (1605).
